(19) Europäisches Patentamt
European Patent Office
Office européen des brevets

(11) **EP 4 645 864 A1**

(12) **EUROPEAN PATENT APPLICATION**
published in accordance with Art. 153(4) EPC

(43) Date of publication:
**05.11.2025 Bulletin 2025/45**

(21) Application number: **23911812.8**

(22) Date of filing: **18.12.2023**

(51) International Patent Classification (IPC):
**H04N 19/597** (2014.01)   **G06T 9/40** (2006.01)

(52) Cooperative Patent Classification (CPC):
**G06T 9/40; H04N 19/597**

(86) International application number:
**PCT/JP2023/045226**

(87) International publication number:
**WO 2024/143031 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2022 US 202263435383 P**
**05.07.2023 US 202363524986 P**

(71) Applicant: **Panasonic Intellectual Property Corporation of America**
**Torrance, CA 90504 (US)**

(72) Inventors:
• **OHKAWA, Masato**
  **Kadoma-shi, Osaka 571-0057 (JP)**
• **IGUCHI, Noritaka**
  **Kadoma-shi, Osaka 571-0057 (JP)**
• **SUGIO, Toshiyasu**
  **Kadoma-shi, Osaka 571-0057 (JP)**
• **NISHI, Takahiro**
  **Kadoma-shi, Osaka 571-0057 (JP)**
• **ITO, Atsushi**
  **Kadoma-shi, Osaka 571-0057 (JP)**

(74) Representative: **Grünecker Patent- und Rechtsanwälte PartG mbB**
**Leopoldstraße 4**
**80802 München (DE)**

(54) **DECODING METHOD, ENCODING METHOD, DECODING DEVICE, AND ENCODING DEVICE**

(57)   A decoding method includes: calculating a predicted value of a first coefficient of a first node included in a first tree structure of a current coding unit by using an inter prediction scheme referring to a reference coding unit (S201); obtaining a residual value of the first coefficient from a bitstream (S202); calculating the first coefficient, based on the predicted value and the residual value (S203); performing inverse hierarchical transform on the first coefficient (S204); and calculating an attribute value of a three-dimensional point included in the current coding unit, based on a result of the inverse hierarchical transform (S205). For example, the inverse hierarchical transform is inverse transform of hierarchical transform applied to two coefficients of two nodes that are adjacent in order to calculate a coefficient of an upper node positioned above the two nodes.

FIG. 21

```
Start
  │
Calculate predicted value of first coefficient
of first node included in first tree structure of      S201
current coding unit by using inter prediction
scheme referring to reference coding unit
  │
Obtain residual value of first coefficient             S202
from bitstream
  │
Calculate first coefficient based on predicted         S203
value and residual value
  │
Perform inverse hierarchical transform on              S204
first coefficient
  │
Calculate attribute value of three-dimensional
point included in current coding unit based on         S205
result of inverse hierarchical transform
  │
End
```

EP 4 645 864 A1

**Description**

[Technical Field]

The present disclosure relates to a decoding method, an encoding method, a decoding device, and an encoding device.

[Background Art]

Devices or services utilizing three-dimensional data are expected to find their widespread use in a wide range of fields, such as computer vision that enables autonomous operations of cars or robots, map information, monitoring, infrastructure inspection, and video distribution. Three-dimensional data is obtained through various means including a distance sensor such as a rangefinder, as well as a stereo camera and a combination of a plurality of monocular cameras.

Methods of representing three-dimensional data include a method known as a point cloud scheme that represents the shape of a three-dimensional structure by a point cloud in a three-dimensional space. In the point cloud scheme, the positions and colors of a point cloud are stored. While point cloud is expected to be a mainstream method of representing three-dimensional data, a massive amount of data of a point cloud necessitates compression of the amount of three-dimensional data by encoding for accumulation and transmission, as in the case of a two-dimensional moving picture (examples include Moving Picture Experts Group-4 Advanced Video Coding (MPEG-4 AVC) and High Efficiency Video Coding (HEVC) standardized by MPEG).

Meanwhile, point cloud compression is partially supported by, for example, an open-source library (Point Cloud Library) for point cloud-related processing.

Furthermore, a technique for searching for and displaying a facility located in the surroundings of the vehicle by using three-dimensional map data is known (see, for example, Patent Literature (PTL) 1).

[Citation List]

[Patent Literature]

[PTL 1] International Publication WO 2014/020663

[Summary of Invention]

[Technical Problem]

In such encoding methods and decoding methods, there is a demand for improving encoding efficiency.

The present disclosure has an object to provide a decoding method, an encoding method, a decoding device, or an encoding device capable of improving encoding efficiency.

[Solution to Problem]

A decoding method according to an aspect of the present disclosure includes: calculating a predicted value of a first coefficient of a first node included in a first tree structure of a current coding unit by using an inter prediction scheme referring to a reference coding unit; obtaining a residual value of the first coefficient from a bitstream; calculating the first coefficient, based on the predicted value and the residual value; performing inverse hierarchical transform on the first coefficient; and calculating an attribute value of a three-dimensional point included in the current coding unit, based on a result of the inverse hierarchical transform.

An encoding method according to an aspect of the present disclosure includes: performing hierarchical transform on an attribute value of a three-dimensional point included in a current coding unit to calculate a first coefficient of a first node included in a first tree structure of the current coding unit; calculating a predicted value of the first coefficient by using an inter prediction scheme referring to a reference coding unit; calculating a residual value that is a difference between the first coefficient and the predicted value; and generating a bitstream including the residual value.

[Advantageous Effects of Invention]

The present disclosure can provide a decoding method, an encoding method, a decoding device, or an encoding device capable of improving encoding efficiency.

**EP 4 645 864 A1**

[Brief Description of Drawings]

[FIG. 1]

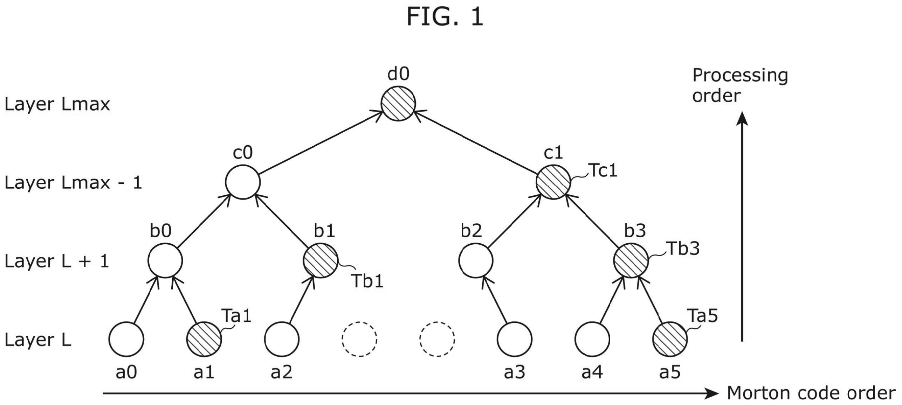

FIG. 1 is a diagram for describing encoding of attribute information using RAHT according to Embodiment 1.
[FIG. 2]

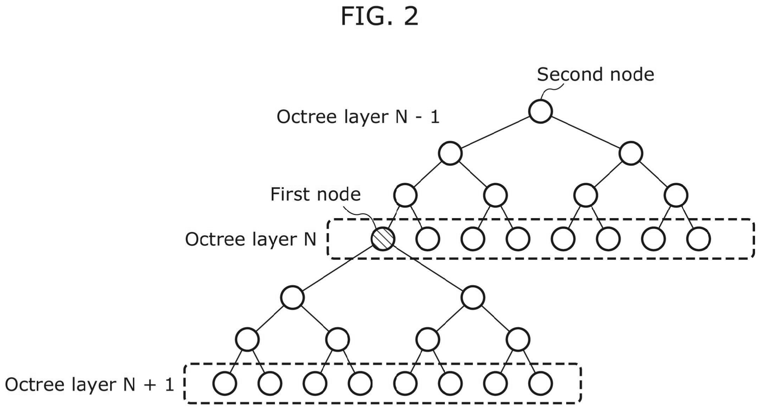

FIG. 2 is a diagram illustrating an example of RAHT current nodes according to Embodiment 1.
[FIG. 3]

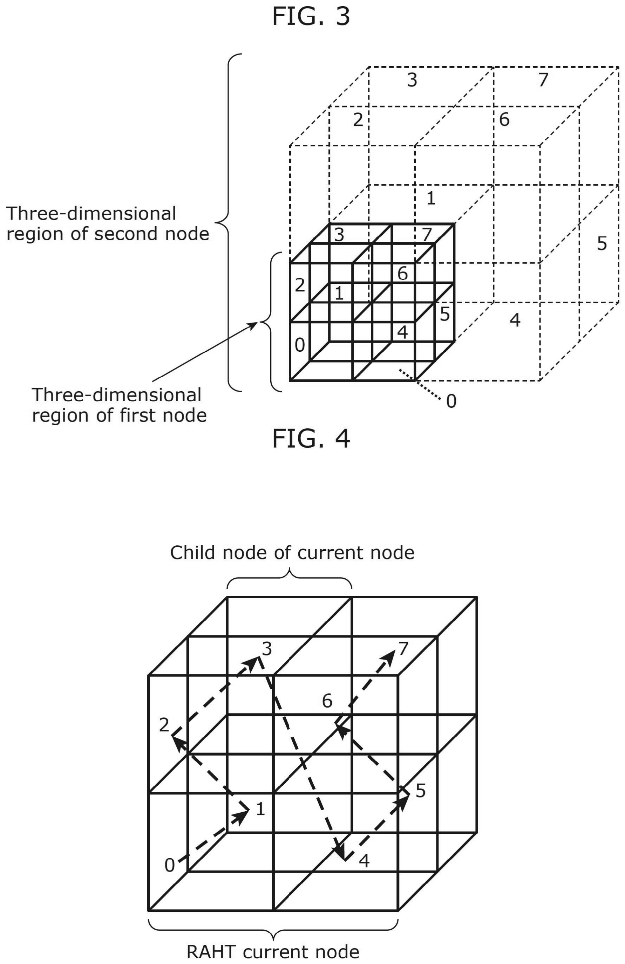

FIG. 3 is a diagram illustrating three-dimensional regions in an octree structure corresponding to an RAHT current node according to Embodiment 1.
[FIG. 4]
FIG. 4 is a diagram illustrating an example configuration of an RAHT current node and child nodes of the current node according to Embodiment 1.
[FIG. 5]

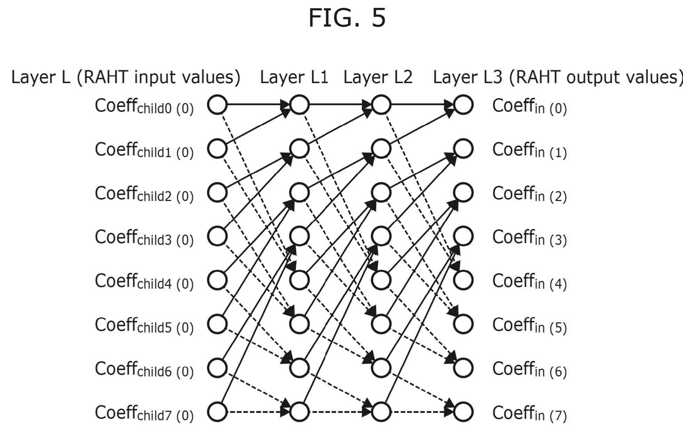

FIG. 5 is a diagram illustrating an example of input values and output values of RAHT according to Embodiment 1.
[FIG. 6]

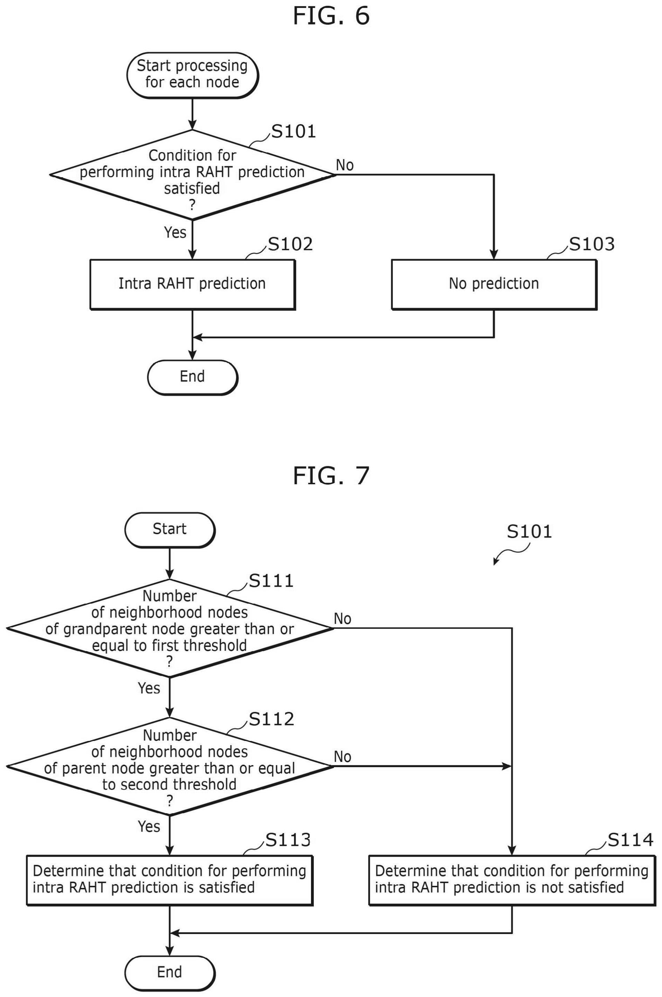

FIG. 6 is a flowchart illustrating an example of processing in an RAHT scheme according to Embodiment 1.
[FIG. 7]
FIG. 7 is a flowchart of performance determination processing for intra RAHT prediction according to Embodiment 1.
[FIG. 8]

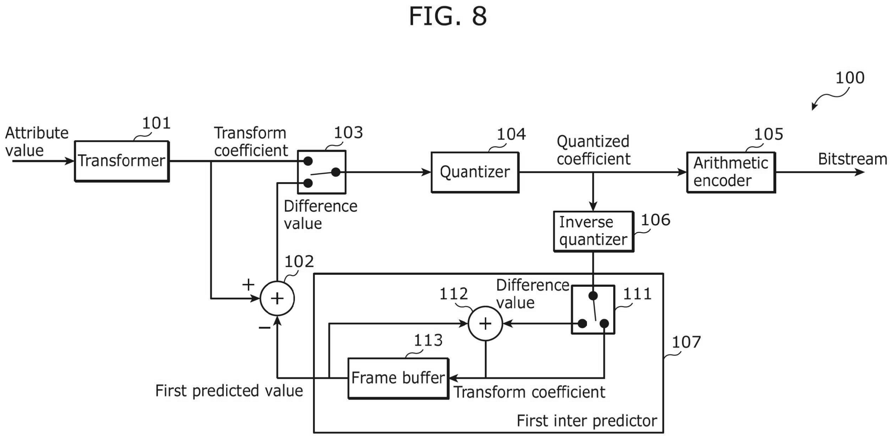

FIG. 8 is a block diagram of an encoding device according to Embodiment 1.
[FIG. 9]

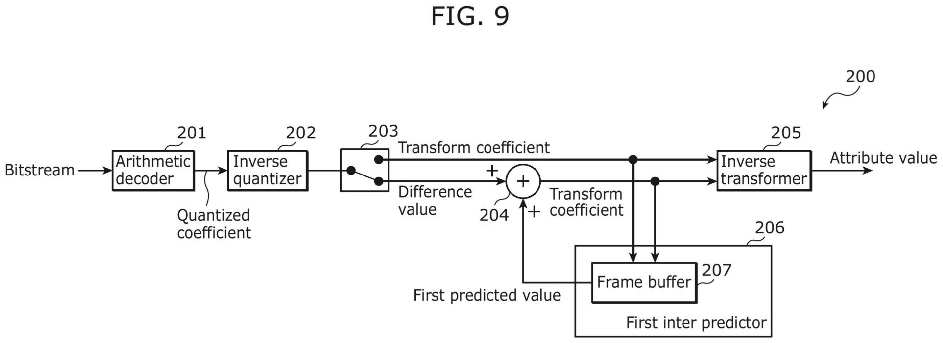

FIG. 9 is a block diagram of a decoding device according to Embodiment 1.
[FIG. 10]

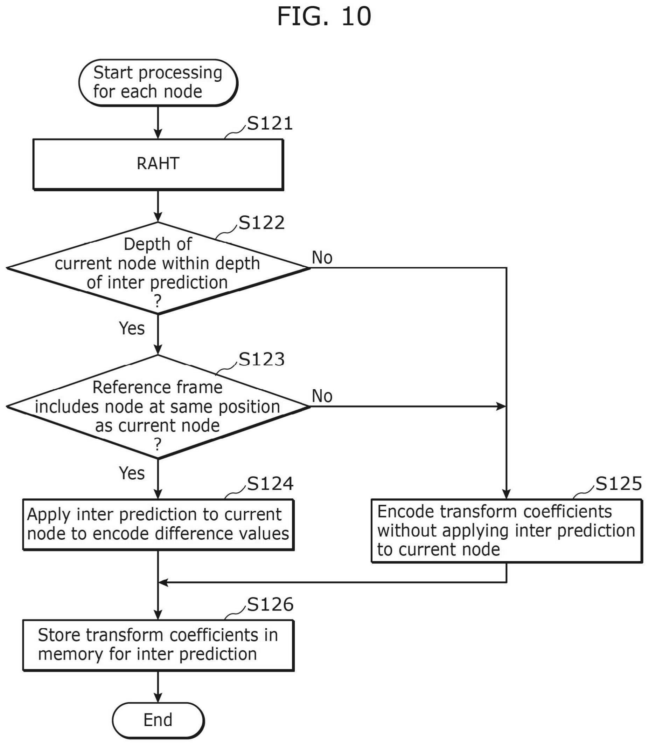

FIG. 10 is a flowchart of inter prediction processing according to Embodiment 1.
[FIG. 11]

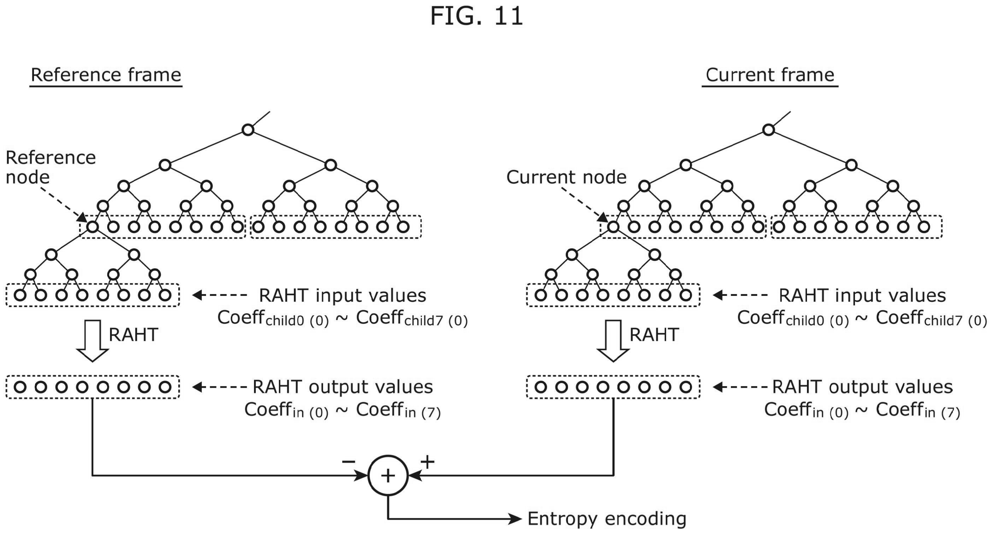

FIG. 11 is a diagram schematically illustrating an overview of the inter prediction processing according to Embodiment 1.
[FIG. 12]

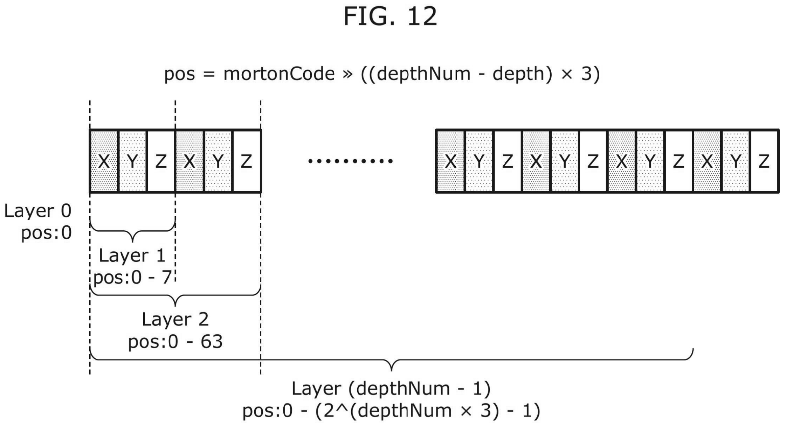

FIG. 12 is a diagram for describing a method for determining matches between layers and positions according to Embodiment 1.
[FIG. 13]

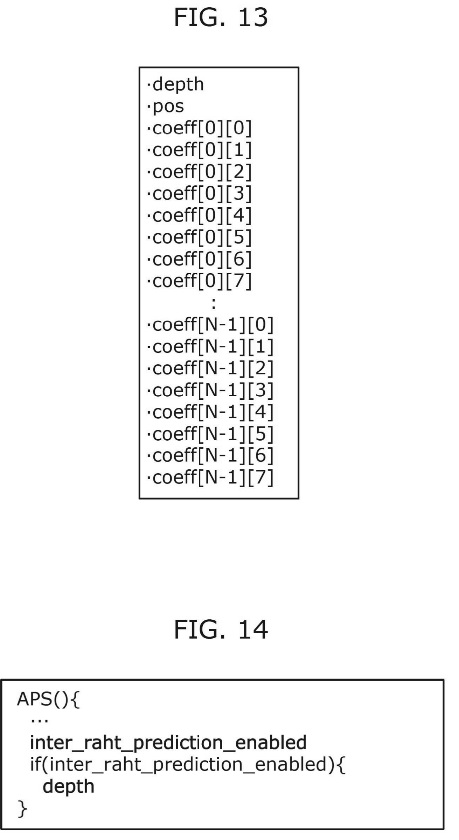

FIG. 13 is a diagram illustrating an example of reference frame data stored in a memory according to Embodiment 1.
[FIG. 14]
FIG. 14 is a diagram illustrating an example of syntax of APS according to Embodiment 1.
[FIG. 15]

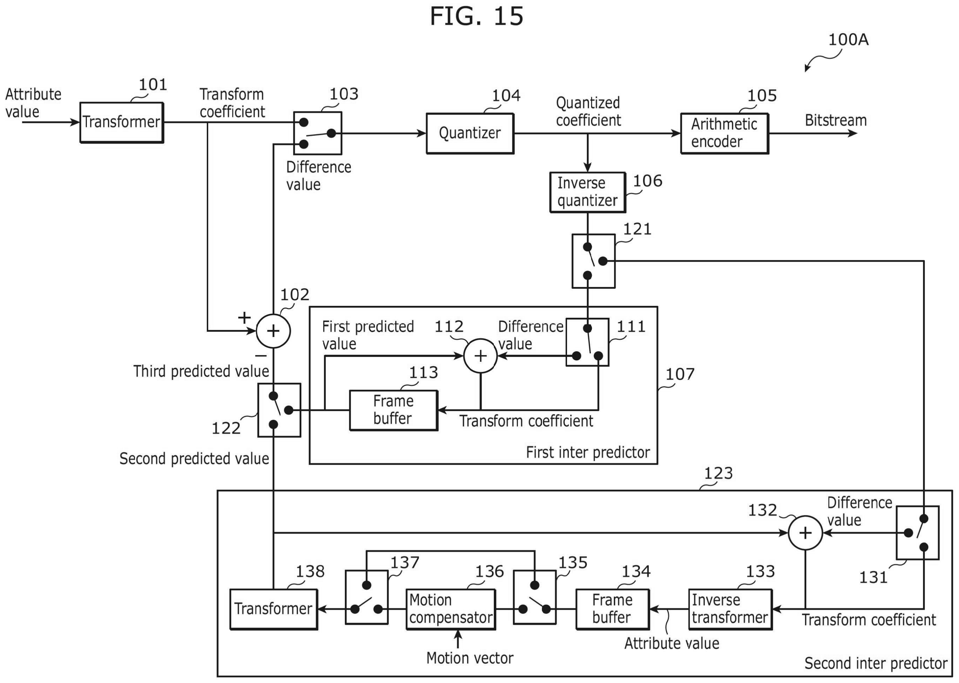

FIG. 15 is a block diagram of an encoding device according to Embodiment 2.
[FIG. 16]

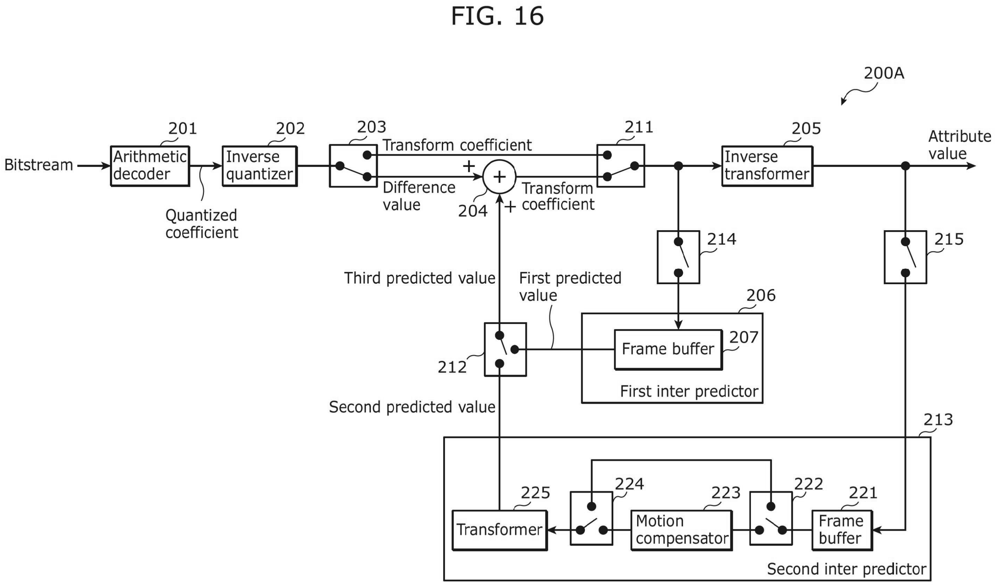

FIG. 16 is a block diagram of a decoding device according to Embodiment 2.
[FIG. 17]

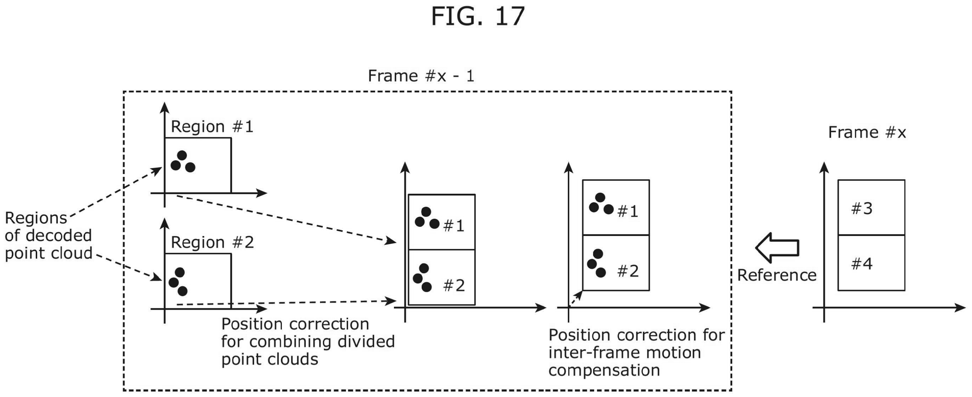

FIG. 17 is a diagram illustrating an example of position correction processing performed on a reference point cloud according to Embodiment 2.
[FIG. 18]

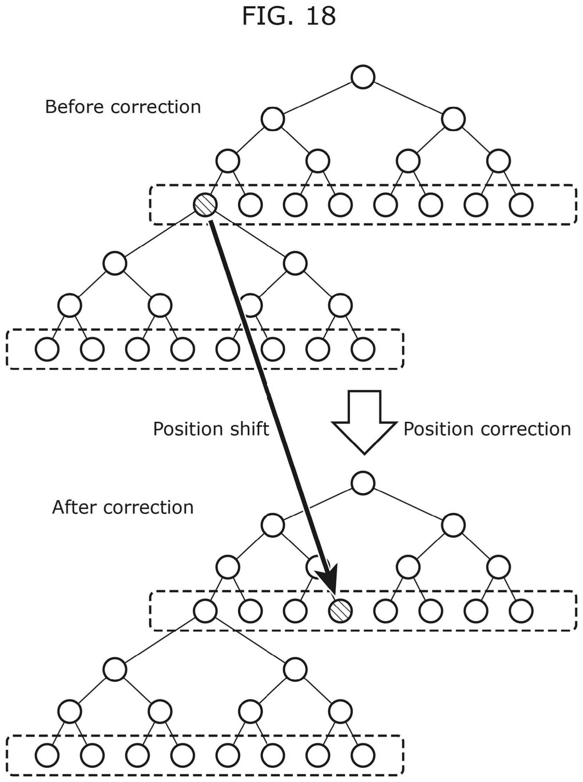

FIG. 18 is a diagram illustrating an example of a position shift of a node in an RAHT tree according to Embodiment 2.
[FIG. 19]

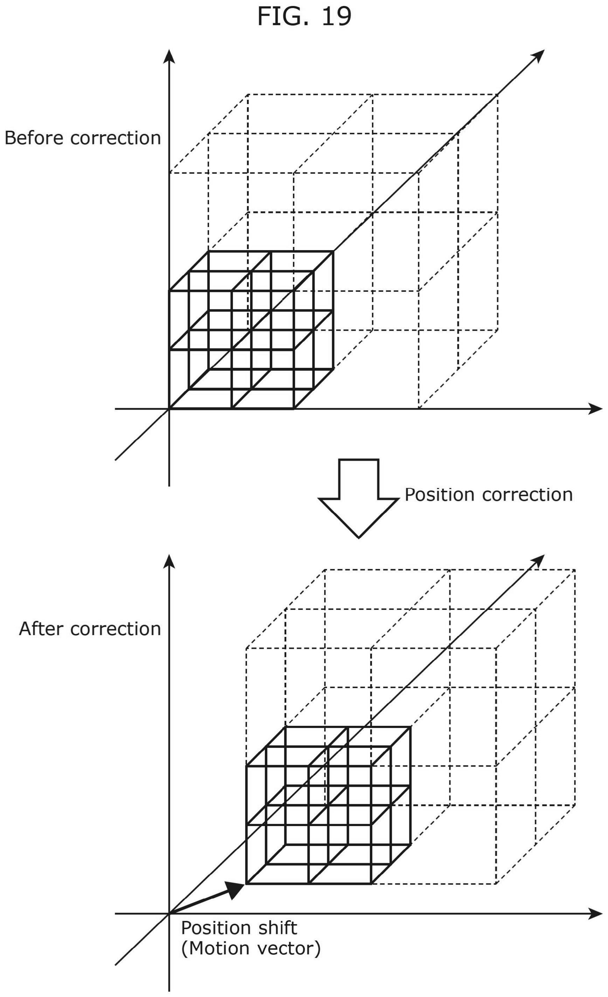

FIG. 19 is a diagram illustrating three-dimensional regions corresponding to an RAHT tree according to Embodiment 2.
[FIG. 20]

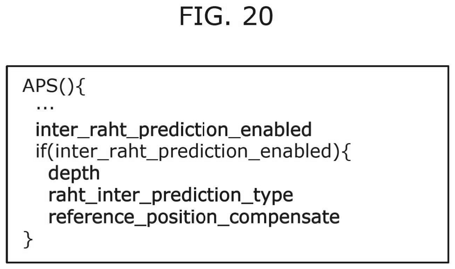

FIG. 20 is a diagram illustrating an example of syntax of APS according to Embodiment 2.
[FIG. 21]

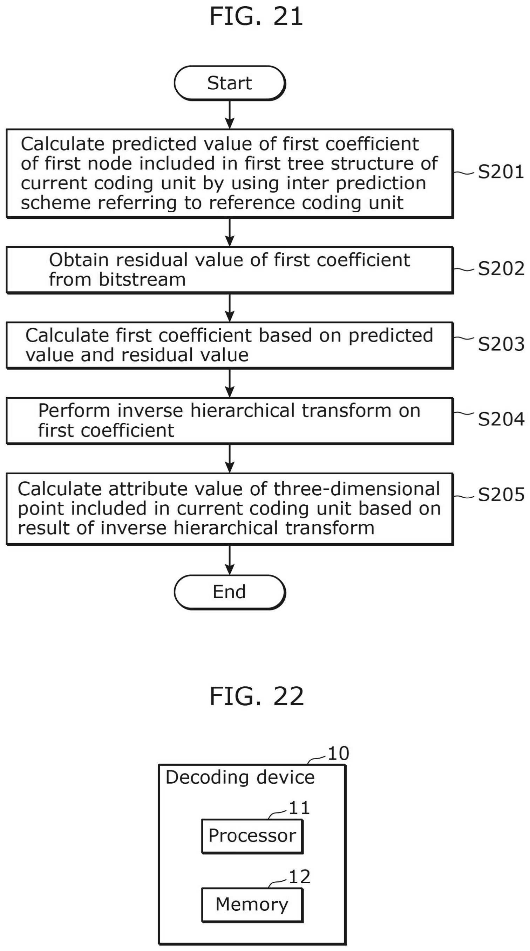

FIG. 21 is a flowchart of decoding processing according to an embodiment.
[FIG. 22]
FIG. 22 is a block diagram of a decoding device according to the embodiment.
[FIG. 23]

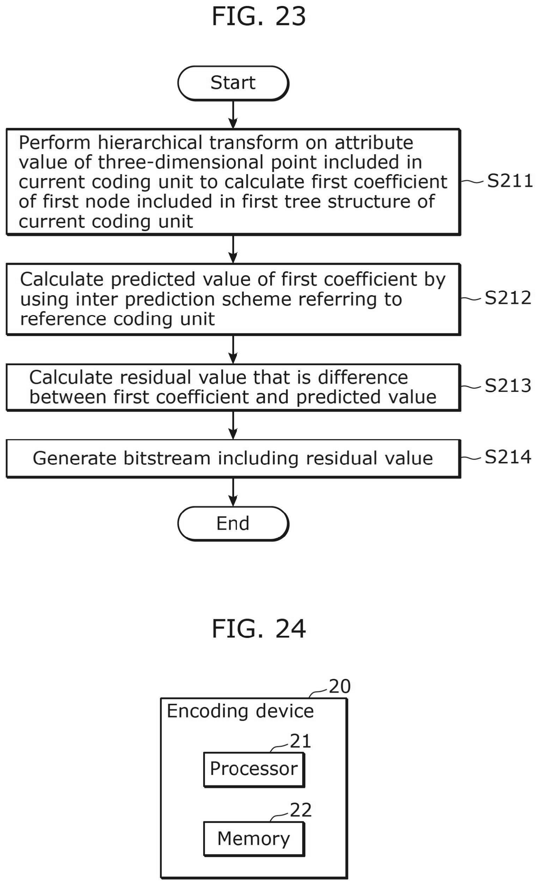

FIG. 23 is a flowchart of encoding processing according to the embodiment.
[FIG. 24]
FIG. 24 is a block diagram of an encoding device according to the embodiment.

[Description of Embodiments]

A three-dimensional data decoding method according to an aspect of the present disclosure includes: calculating a predicted value of a first coefficient of a first node included in a first tree structure of a current coding unit by using an inter prediction scheme referring to a reference coding unit; obtaining a residual value of the first coefficient from a bitstream; calculating the first coefficient, based on the predicted value and the residual value; performing inverse hierarchical transform on the first coefficient; and calculating an attribute value of a three-dimensional point included in the current coding unit, based on a result of the inverse hierarchical transform.

Accordingly, since inter prediction accuracy can be improved when a coefficient correlation exists between coding units, encoding efficiency can be improved.

For example, the inverse hierarchical transform may be inverse transform of hierarchical transform applied to two coefficients of two nodes that are adjacent in order to calculate a coefficient of an upper node positioned above the two nodes. In such a hierarchical transform, a coefficient correlation tends to exist between coding units. Accordingly, since prediction accuracy can be improved, encoding efficiency can be improved.

For example, in the calculating of the predicted value, a second node included in a second tree structure of the reference coding unit may be referred to, and a second position of the second node in the second tree structure may be the same as a first position of the first node in the first tree structure. Accordingly, by referring to the second node that is at a position that is the same as the position of the first node and for which the possibility that a coefficient correlation exists between coding units is high, prediction accuracy can be improved. Therefore, encoding efficiency can be improved.

For example, in the calculating of the predicted value, a second node included in a second tree structure of the reference coding unit may be referred to, and a difference between a second position of the second node in the second tree structure and a first position of the first node in the first tree structure may be smaller than a predetermined threshold. Accordingly, by referring to the second node that is at a position close to the position of the first node and for which the possibility that a coefficient correlation exists between coding units is high, prediction accuracy can be improved. Therefore, encoding efficiency can be improved.

For example, the first position and the second position may be represented by a Morton code. Accordingly, the second node that is at a position that is the same or close to the position of the first node can be easily searched for by using the Morton code.

For example, in the hierarchical transform, a value of a low-frequency component and a value of a high-frequency component may be generated, the low-frequency component may correspond to the first coefficient, and the value of the high-frequency component need not be predicted. Accordingly, by using prediction on a low-frequency component for which prediction accuracy tends to increase, encoding efficiency can be improved. Furthermore, by not using prediction on a high-frequency component, the processing amount can be reduced.

For example, the decoding method may further include: storing the first coefficient in a buffer memory in order to calculate a predicted value of a coefficient of another node. Accordingly, in the decoding method, the first coefficient stored in the buffer memory can be used in the prediction of a coefficient of another node.

For example, the decoding method may further include: obtaining a quantized value generated by quantizing the first coefficient; and storing the quantized value in a buffer memory without inverse-quantizing the quantized value, in order to calculate a predicted value of another node. Accordingly, the data amount of data to be stored in a memory can be reduced.

For example, the referring may be performed per node. Accordingly, even if coding unit correlation as a whole is not high, prediction can be applied when partial correlation is high, and thus coding efficiency can be improved.

For example, in the calculating of the predicted value: a second node included in a second tree structure of the reference coding unit may be referred to; and the predicted value may be calculated when a total number of coefficients of the first node and a total number of coefficients of the second node are the same. Accordingly, performance of erroneous prediction can be prevented.

For example, in the calculating of the predicted value, the predicted value may be calculated when at least one of a total number of three-dimensional points included in the current coding unit, an arrangement of the three-dimensional points, a density of the three-dimensional points, or a depth of the first node in the first tree structure satisfies a predetermined condition. Accordingly, when the possibility that a coefficient correlation exists between coding units is low, the processing amount can be reduced by not performing prediction.

For example, when the predetermined condition is satisfied, the first coefficient may be stored in a buffer memory in order to calculate a predicted value of a coefficient of another node. Accordingly, the data amount of data to be stored in the memory can be reduced.

For example, in the calculating of the predicted value, the predicted value may be calculated by performing motion compensation on the reference coding unit, and referring to the reference coding unit that has been motion compensated. Accordingly, prediction accuracy can be improved in the case where there is movement between coding units, and thus encoding efficiency can be improved.

For example, the decoding method may further include: storing the attribute value calculated in the buffer memory in order to calculate a predicted value of a coefficient of another node. Accordingly, in the decoding method, the attribute value stored in the buffer memory can be used in the prediction of a coefficient of another node.

For example, in the calculating of the predicted value, the predicted value may be calculated by: calculating an attribute value of the reference coding unit by performing the inverse hierarchical transform on a second coefficient of the reference coding unit; performing motion compensation on the attribute value of the reference coding unit; and performing hierarchical transform on the attribute information of the reference coding unit that has been motion-compensated.

For example, a three-dimensional data decoding method according to an aspect of the present disclosure includes: calculating a predicted value of a first coefficient of a first node included in a current coding unit by using an inter prediction scheme that refers to a reference coding unit; obtaining a residual value of the first coefficient from a bitstream; calculating the first coefficient, based on the predicted value and the residual value; and performing an inverse transform process on the first coefficient to calculate an attribute value of a three-dimensional point included in the current coding unit. The first coefficient is generated by a transform process executed by an encoding device, the transform process transforming the attribute value into the first coefficient.

Accordingly, since inter prediction accuracy can be improved when a coefficient correlation exists between coding units, encoding efficiency can be improved.

Furthermore, a three-dimensional data encoding method according to an aspect of the present disclosure includes: performing hierarchical transform on an attribute value of a three-dimensional point included in a current coding unit to calculate a first coefficient of a first node included in a first tree structure of the current coding unit; calculating a predicted value of the first coefficient by using an inter prediction scheme referring to a reference coding unit; calculating a residual value that is a difference between the first coefficient and the predicted value; and generating a bitstream including the residual value.

Accordingly, since inter prediction accuracy can be improved when a coefficient correlation exists between coding units, encoding efficiency can be improved.

Furthermore, a decoding device according to an aspect of the present disclosure includes: a processor; and a memory. Using the memory, the processor: calculates a predicted value of a first coefficient of a first node included in a first tree structure of a current coding unit by using an inter prediction scheme referring to a reference coding unit; obtains a residual value of the first coefficient from a bitstream; calculates the first coefficient, based on the predicted value and the residual value; performs inverse hierarchical transform on the first coefficient; and calculates an attribute value of a three-dimensional point included in the current coding unit, based on a result of the inverse hierarchical transform.

Furthermore, an encoding device according to an aspect of the present disclosure includes: a processor; and a memory. Using the memory, the processor: performs hierarchical transform on an attribute value of a three-dimensional point included in a current coding unit to calculate a first coefficient of a first node included in a first tree structure of the current coding unit; calculates a predicted value of the first coefficient by using an inter prediction scheme referring to a reference coding unit; calculates a residual value that is a difference between the first coefficient and the predicted value; and generates a bitstream including the residual value.

It is to be noted that these general or specific aspects may be implemented as a system, a method, an integrated circuit, a computer program, or a computer-readable recording medium such as a CD-ROM, or may be implemented as any combination of a system, a method, an integrated circuit, a computer program, and a recording medium.

Hereinafter, embodiments will be specifically described with reference to the drawings. It is to be noted that each of the following embodiments indicate a specific example of the present disclosure. The numerical values, shapes, materials, constituent elements, the arrangement and connection of the constituent elements, steps, the processing order of the steps, etc., indicated in the following embodiments are mere examples, and thus are not intended to limit the present disclosure. Among the constituent elements described in the following embodiments, constituent elements not recited in any one of the independent claims will be described as optional constituent elements.

[EMBODIMENT 1]

[RAHT scheme]

As a method of encoding attribute information (also referred to as attribute values) on three-dimensional points in a point cloud, the following will describe a method using Region Adaptive Hierarchical Transform (RAHT). FIG. 1 is a diagram for describing the encoding of attribute information using RAHT.

First, an encoding device (a three-dimensional data encoding device) generates a Morton code based on geometry information (position information) on the three-dimensional points, and sorts attribute information on the three-dimensional points in Morton code order.

Next, the encoding device applies Haar transform to the attribute information on pairs of adjacent three-dimensional points in Morton code order to generate high-frequency components and low-frequency components in layer L. For example, the encoding device may use Haar transform of a 2 × 2 matrix. The generated high-frequency components are included in encoding coefficients as high-frequency components in layer L, and the generated low-frequency components are used as input values for layer L + 1 above layer L.

After generating the high-frequency components and the low-frequency components in layer L using the attribute information in layer L, the encoding device continues with processing in layer L + 1. In the processing in layer L + 1, the encoding device applies Haar transform to pairs of low-frequency components obtained by Haar-transforming the attribute information in layer L, thereby generating high-frequency components and low-frequency components in layer L + 1. The generated high-frequency components are included in the encoding coefficients as high-frequency components in layer L + 1, and the generated low-frequency components are used as input values for layer L + 2 above layer L + 1.

The encoding device repeats this hierarchical processing and, when the number of low-frequency components input to a layer becomes one, determines that the highest layer Lmax is reached. The encoding device includes, in the encoding coefficients, the low-frequency component in layer Lmax - 1 that has been input to layer Lmax. The encoding device then quantizes the values of the low-frequency component or the high-frequency components in the encoding coefficients and encodes the quantized values using a scheme such as entropy encoding.

It is to be noted that, if a pair of adjacent three-dimensional points to be Haar-transformed consists of only one three-dimensional point, the encoding device may use the value of the attribute information on the one three-dimensional point as an input value for the higher layer.

Thus, the encoding device hierarchically applies Haar transform to the input attribute information to generate high-frequency components and a low-frequency component of the attribute information, which are then encoded through processing such as quantization to be described below. This can improve the encoding efficiency.

For N-dimensional attribute information, the encoding device may apply Haar transform independently to each dimension to calculate encoding coefficients for each dimension. For example, if the attribute information is color information such as RGB or YUV, the encoding device may apply Haar transform to each component to calculate encoding coefficients for each component.

The encoding device may apply Haar transform in the order of layers L, L + 1, ..., and Lmax. As the process approaches layer Lmax, the generated encoding coefficients contain more low-frequency components of the input attribute information.

In the example shown in FIG. 1, a0, a1, a2, a3, a4, and a5 are the input attribute information. Of the encoding coefficients after Haar transform, encoding coefficients Ta1, Ta5, Tb1, Tb3, Tc1, and d0 are encoded. The other encoding coefficients, including b0, b2, and c0, are intermediate values and therefore not encoded.

Specifically, in the example shown in FIG. 1, a0 and a1 are Haar-transformed to generate high-frequency component Ta1 and low-frequency component b0. Here, if weights w0 and w1 (to be described below) are the same, then low-frequency component b0 is the average of a0 and a1, and high-frequency component Ta1 is the difference between a0 and a1.

Because a2 has no attribute information to be paired with, a2 is simply used as b1. Similarly, because a3 has no attribute information to be paired with, a3 is simply used as b2. Further, a4 and a5 are Haar-transformed to generate high-frequency component Ta5 and low-frequency component b3. For example, b1, b2, b3, and Ta5 are expressed by Equations 1 to 4 below.

[Math. 1]

$$b1 = a2 \quad \cdots \quad (\text{Equation 1})$$

$$b2 = a3 \quad \cdots \quad (\text{Equation 2})$$

$$\begin{bmatrix} b3 \\ Ta5 \end{bmatrix} = \begin{bmatrix} a & b \\ -b & a \end{bmatrix} \begin{bmatrix} a4 \\ a5 \end{bmatrix} \quad \cdots \quad (\text{Equation 3})$$

$$a = \sqrt{\frac{w0}{w0 + w1}} \quad b = \sqrt{\frac{w1}{w0 + w1}} \quad \cdots \quad (\text{Equation 4})$$

Weights w0 and w1 are assigned to each three-dimensional point. In an example, the encoding device may calculate the weights based on information such as the distance between two adjacent three-dimensional points to be Haar-transformed. For example, the encoding device may improve the encoding efficiency using greater weights for shorter distances. It is to be noted that the encoding device may calculate the weights in other manners or may use no weights, i.e., w0 = w1.

In layer L + 1, b0 and b1 are Haar-transformed to generate high-frequency component Tb1 and low-frequency component c0. Similarly, b2 and b3 are Haar-transformed to generate high-frequency component Tb3 and low-frequency component c1. For example, Tb1, c0, Tb3, and c1 are expressed by Equations 5 and 6 below.

[Math. 2]

$$\begin{bmatrix} c0 \\ Tb1 \end{bmatrix} = \begin{bmatrix} a & b \\ -b & a \end{bmatrix} \begin{bmatrix} b0 \\ b1 \end{bmatrix} \quad \cdots \quad (\text{Equation 5})$$

$$\begin{bmatrix} c1 \\ Tb3 \end{bmatrix} = \begin{bmatrix} a & b \\ -b & a \end{bmatrix} \begin{bmatrix} b2 \\ b3 \end{bmatrix} \quad \cdots \quad (\text{Equation 6})$$

In layer Lmax - 1, c0 and c1 are Haar-transformed to generate high-frequency component Tc1 and low-frequency component d0. For example, Tc1 and d0 are expressed by Equation 7 below.

[Math. 3]

$$\begin{bmatrix} d0 \\ Tc1 \end{bmatrix} = \begin{bmatrix} a & b \\ -b & a \end{bmatrix} \begin{bmatrix} c0 \\ c1 \end{bmatrix} \quad \cdots \quad (\text{Equation 7})$$

Before encoding the encoding coefficients resulting from Haar-transform, the encoding device may quantize them. For example, the encoding device may quantize an encoding coefficient by dividing the encoding coefficient by a quantization scale (also referred to as a quantization step (QS)). In this case, the smaller the quantization scale, the smaller the error (quantization error) possibly caused by the quantization. Conversely, the greater the quantization scale, the greater the quantization error.

Now, inverse Haar transform will be described. A decoding device (a three-dimensional data decoding device) decodes the attribute values of three-dimensional points by applying inverse Haar transform to inverse-quantized encoding coefficients.

First, the decoding device generates a Morton code based on geometry information on the three-dimensional points, and sorts the three-dimensional points in Morton code order. Next, the decoding device applies inverse Haar transform to the encoding coefficients including the low-frequency components in layer L + 1 and the encoding coefficients including the high-frequency components in layer L, thereby recovering the attribute information on the adjacent three-dimensional regions (nodes) in Morton code order in layer L (the adjacent three-dimensional points if the layer is the lowest layer). For example, the decoding device may use inverse Haar transform of a 2 × 2 matrix. The recovered attribute information in layer L is used as input values for layer L - 1 below.

The decoding device repeats this hierarchical processing and, upon completion of decoding all the attribute information in the lowest layer, terminates the process. It is to be noted that, if a pair of adjacent three-dimensional regions to be inverse Haar-transformed in layer L - 1 consists of only one three-dimensional region, the decoding device may substitute the value of a coding component in layer L for the attribute value of the one three-dimensional region. This allows the decoding device to apply Haar transform to all the values of the input attribute information to correctly decode the bitstream with improved encoding efficiency.

The decoding device may apply inverse Haar transform in the order of layers Lmax, Lmax - 1, ..., and L. In the example shown in FIG. 1, Ta1, Ta5, Tb1, Tb3, Tc1, and d0 are the inverse-quantized encoding coefficients, yielding decoded values a0, a1, a2, a3, a4, and a5.

For example, c0 and c1 obtained by inverse Haar transform in layer Lmax - 1 are expressed by Equation 8 below. It is to be noted that a and b are expressed by Equation 4 above.

[Math. 4]

$$\begin{bmatrix} c0 \\ c1 \end{bmatrix} = \begin{bmatrix} a & -b \\ b & a \end{bmatrix} \begin{bmatrix} d0 \\ Tc1 \end{bmatrix} \quad \cdots \quad (\text{Equation 8})$$

For example, b0, b1, b2, and b3 obtained by inverse Haar transform in layer L + 1 are expressed by Equations 9 and 10 below.

[Math. 5]

$$\begin{bmatrix} b0 \\ b1 \end{bmatrix} = \begin{bmatrix} a & -b \\ b & a \end{bmatrix} \begin{bmatrix} c0 \\ Tb1 \end{bmatrix} \quad \cdots \quad \text{(Equation 9)}$$

$$\begin{bmatrix} b2 \\ b3 \end{bmatrix} = \begin{bmatrix} a & -b \\ b & a \end{bmatrix} \begin{bmatrix} c1 \\ Tb3 \end{bmatrix} \quad \cdots \quad \text{(Equation 10)}$$

For example, a0, a1, a2, a3, a4, and a5 obtained by inverse Haar transform in layer L are expressed by Equations 11 to 14 below.

[Math. 6]

$$\begin{bmatrix} a0 \\ a1 \end{bmatrix} = \begin{bmatrix} a & -b \\ b & a \end{bmatrix} \begin{bmatrix} b0 \\ Ta1 \end{bmatrix} \quad \cdots \quad \text{(Equation 11)}$$

$$a2 = b1 \quad \cdots \quad \text{(Equation 12)}$$

$$a3 = b2 \quad \cdots \quad \text{(Equation 13)}$$

$$\begin{bmatrix} a4 \\ a5 \end{bmatrix} = \begin{bmatrix} a & -b \\ b & a \end{bmatrix} \begin{bmatrix} b3 \\ Ta5 \end{bmatrix} \quad \cdots \quad \text{(Equation 14)}$$

[Octree nodes and RAHT scheme]

FIG. 2 is a diagram illustrating an example of RAHT current nodes. FIG. 3 is a diagram illustrating three-dimensional regions in an octree structure corresponding to an RAHT current node illustrated in FIG. 2.

The RAHT scheme performs frequency transform processing (see FIG. 1) in units of, for example, $2 \times 2 \times 2$ voxels. FIG. 3 illustrates an octree representation of geometry information on a point cloud. In addition, the processing is performed for each node included in the octree hierarchy illustrated in FIG. 2.

As an example, the following description focuses on a first node, which is an RAHT current node in octree layer N. In this case, RAHT uses, as an input value, the lowest one of the eight frequency components corresponding to the three-dimensional regions of each of a maximum of eight child nodes of the first node in octree layer N + 1. This yields output of a maximum of eight transform coefficients (frequency components) corresponding to the three-dimensional region of the first node. Of the eight output transform coefficients, the lowest frequency component is used as one of the input values in RAHT to be performed on a second node, which is the parent node of the first node. It is to be noted that, if octree layer N + 1 is the lowest layer of the octree hierarchy, the three-dimensional regions of the nodes in the lowest layer are points, and their values are the attribute values of the points. That is, RAHT transform on the first node uses, as input values, the attribute values of a maximum of eight child nodes (points) of the first node.

Here, the layers of the octree hierarchy are referred to as depths and defined as layer 0, layer 1, layer 2, ..., from the highest layer. It is to be noted that output values resulting from RAHT are referred to as transform coefficients, although they may also be referred to as encoding coefficients, RAHT transformed values, or Haar transformed values.

[Dyadic RAHT scheme]

Now, RAHT processing based on the Dyadic RAHT scheme for each node in an octree hierarchy will be described. FIG. 4 is a diagram illustrating an example configuration of an RAHT current node and child nodes of the current node. FIG. 5 is a diagram illustrating an example of input values and output values of RAHT.

In RAHT of a current node in octree layer N, attribute values (if octree layer N + 1 is the lowest layer) or frequency components (if octree layer N + 1 is not the lowest layer) corresponding to the child nodes (in octree layer N + 1) of the current node are input. Then, for each pair of adjacent subnodes along any axis, transform is performed with a predetermined transform formula (e.g., Haar transform) to output high-frequency components and low-frequency components. It is to be noted that the subnodes may also be referred to as nodes or child nodes, but the subnodes result from dividing an octree node and are therefore referred to as subnodes here so that they are distinguished from octree nodes.

As shown in FIG. 5, the output values resulting from the transform processing along the one axis constitute the subnodes in layer L1. Similar transform processing is then performed along the second and third axes to derive the subnodes in layer L3. The subnodes in layer L3 are the output values of RAHT. It is to be noted that layers L1 to L3 here are the layers in RAHT and represented by binary trees.

Here, because the input values have values if their corresponding child nodes have points, the input values can be used as information indicating whether the child nodes have points. The maximum number of child nodes is eight; if all the child nodes have points, the maximum of eight input values exist. Further, of $Coeff_{in(i)}$ (i is 0 to 7), i.e., the transform coefficients (output values) after RAHT, up to eight $Coeff_{in(i)}$ have non-zero values depending on whether the child nodes have points.

Each input value of RAHT is the lowest frequency component of the transform coefficients of the corresponding child node of the current node. For example, input value $Coeff_{child0(0)}$ shown in FIG. 5 is the lowest frequency component of the eight transform coefficients calculated for the child node having child node number 0. It is to be noted that, if the child nodes belong to the lowest layer, the input values are the attribute values of the points in the child nodes.

The three-step processing of transforming the frequency values of pairs of adjacent nodes into low-frequency components and high-frequency components along each axis outputs eight frequency components $Coeff_{in(0)}$ to $Coeff_{in(7)}$ corresponding to the current node. Here, $Coeff_{in(0)}$ is the lowest-frequency component, i.e., the DC component, and is used as an input value of RAHT of the parent node. $Coeff_{in(7)}$ is the highest-frequency component. That is, the greater the value of i in $Coeff_{in(i)}$ (i is 0 to 7), the higher the frequency of the component.

Meanwhile, $Coeff_{in(1)}$ to $Coeff_{in(7)}$ are quantized and entropy-encoded (arithmetically encoded). In the highest-layer node, $Coeff_{in(0)}$ is also quantized and entropy-encoded.

That is, in the Dyadic RAHT scheme, the frequency components other than the highest frequency component are also subjected to hierarchical RAHT unlike in the processing illustrated in FIG. 1, in which these frequency components are simply quantized and encoded.

[Intra prediction in RAHT scheme]

RAHT is performed for each node in an octree hierarchy. The nodes are processed, for example in Morton code order, in each layer to which the nodes belong. It is to be noted that the layer order or the Morton code order may be in ascending order or descending order.

FIG. 6 is a flowchart illustrating an example of processing in the RAHT scheme. The processing illustrated in FIG. 6 is repeatedly performed for each node.

First, the encoding device determines whether to perform intra RAHT prediction by determining whether a condition for performing intra RAHT prediction is satisfied (S101). If the condition for performing intra RAHT prediction is satisfied (Yes at S101), the encoding device performs intra RAHT prediction to encode information on the current node (S102). Conversely, if the condition for performing intra RAHT prediction is not satisfied (No at S101), the encoding device does not perform intra RAHT prediction and encodes information on the current node without using prediction (S103).

Here, intra RAHT prediction is prediction processing that uses information on another node in the current frame that includes the current node. For example, in intra RAHT prediction, the encoding device calculates predicted values from the attribute values of a neighborhood node that is in the neighborhood of the current node. The encoding device then performs RAHT on the predicted values to calculate predicted transform coefficients. The encoding device then calculates prediction residuals, which are the differences between transform coefficients obtained by performing RAHT on the current node and the predicted transform coefficients. The encoding device then arithmetically encodes (entropy-encodes) the prediction residuals.

Further, at step S101, the encoding device determines whether to perform intra RAHT prediction based on, for example, the node density. Specifically, the encoding device determines to perform intra RAHT prediction if the density is high, and not to perform intra RAHT prediction if the density is low. For example, the encoding device determines the density from the number of neighborhood nodes of the grandparent and parent nodes. FIG. 7 is a flowchart of this determination processing (S101).

First, the encoding device determines whether the number of neighborhood nodes of the grandparent node of the current node is greater than or equal to a first threshold (S111). It is to be noted that a neighborhood node of a certain node is a node that includes at least one point located in the neighborhood of the certain node (the grandparent node in the above case) (e.g., located at a distance smaller than a predetermined value from the certain node).

If the number of neighborhood nodes of the grandparent node is greater than or equal to the fist threshold (Yes at S111), the encoding device determines whether the number of neighborhood nodes of the parent node is greater than or equal to a second threshold (S112). If the number of neighborhood nodes of the parent node is greater than or equal to the second threshold (Yes at S112), the encoding device determines that the condition for performing intra RAHT prediction is satisfied (S113).

Conversely, if the number of neighborhood nodes of the grandparent node is smaller than the first threshold (No at S111) or if the number of neighborhood nodes of the parent node is smaller than the second threshold (No at S112), the encoding device determines that the condition for performing intra RAHT prediction is not satisfied (S114).

It is to be noted that, although the description here illustrates an example of processing in the encoding device, similar processing may be performed in the decoding device as well. Similarly, for any processing in the encoding device to be described below, similar processing may be performed in the decoding device as well. Further, the encoding device may perform step S113 if at least one of the conditions at steps S111 and S112 is satisfied.

[Inter prediction in RAHT scheme]

An inter prediction scheme (a temporal prediction scheme) in RAHT-based encoding of attribute values will be described.

Currently, in the encoding and decoding of attribute values of a point cloud using the RAHT scheme, no techniques have successfully improved the encoding efficiency using attribute values of point clouds at different timepoints. Point clouds at different timepoints vary in the point arrangement or the presence or absence of points in a certain region, as well as in attribute values.

On the other hand, point clouds at different timepoints that satisfy certain conditions may have a high correlation between the attribute values or transform coefficients of points close to each other. For example, the correlation between transform coefficients in point clouds at different timepoints may depend on the number, arrangement, and density of the points in the point clouds, or the node layers of the point clouds. Further, the correlation tends to be high in cases such as when a sensor that captures the point clouds captures the same range or when the sensor moves at a low speed.

The present embodiment describes an inter prediction scheme. In this scheme, to encode the current frame, which is the point cloud frame being processed, the encoding device calculates predicted values by predicting transform coefficients using information in a reference frame, which is a point cloud frame at a timepoint different from that of the current frame. The encoding device calculates difference values (also referred to as prediction residuals or residual values) between the transform coefficients of the current frame and the predicted values, and encodes the difference values. For example, the transform coefficients used for calculating the predicted values are transform coefficients that are included in a reference frame at a timepoint different from that of the current frame, and that correspond to the same spatial position and spatial size as the transform coefficients of the current frame. This enables prediction with a high correlation.

In an example, the encoding device may use prediction if transform coefficients are highly correlated with each other, and not use prediction otherwise. Thus, the encoding device may have a function of determining whether to use prediction. This can improve the efficiency of RAHT-based encoding of attribute values.

It is to be noted that the scheme described in the present embodiment is also applicable to predicting transformed values (transform coefficients) obtained by attribute-value transform processing other than RAHT.

Further, although the description here illustrates an example in which the point cloud used for prediction (the point cloud to be referred to) is included in a frame at a timepoint different from that of the current frame, the point cloud used for prediction may be a point cloud (a reference point cloud) included in the current frame and different from the current point cloud. For example, the current point cloud and the reference point cloud may be point clouds included in different data units (e.g., tiles or slices) obtained by dividing the current frame.

Further, a frame at a different timepoint may be a frame immediately preceding the current frame or a frame after the current frame. Further, multiple frames may be used for prediction.

Further, the reference frame may be a frame at the same timepoint as the current frame and different from the current frame. For example, the current frame and the reference frame may be a frame for the left eye and a frame for the right eye at the same timepoint.

[Configurations of encoding device and decoding device]

An encoding device according to the present embodiment includes a memory storing transform coefficients of decoded three-dimensional points, and uses the transform coefficients for predicting three-dimensional points that have not been encoded. For example, the transform coefficients are used to predict the transform coefficients of the attribute values of three-dimensional points included in a slice or frame different from the slice or frame to which the current three-dimensional point belongs. The different slice or frame is, for example, a slice or frame at a timepoint different from that of the slice or frame to which the current three-dimensional point belongs. It is to be noted that the memory may store values obtained by performing inverse quantization or inverse Haar transform on transform coefficients.

Here, the transform coefficients of three-dimensional points are, for example, frequency components $Coeff_{in(0)}$ to $Coeff_{in(7)}$ in the Dyadic RAHT scheme illustrated in FIG. 5.

FIG. 8 is a block diagram illustrating the configuration of encoding device 100 according to the present embodiment. It is to be noted that, although the diagram here illustrates only processing units related to the encoding of the attribute values of three-dimensional points in point cloud data, encoding device 100 may include other processing units, such as a processing unit that encodes geometry information on three-dimensional points. For example, encoding device 100 may encode the geometry information using an octree.

Specifically, in an octree, a current space is divided into eight nodes (subspaces), and 8-bit information (an occupancy code) indicating whether each node includes point clouds is generated. Further, each node that includes point clouds are subdivided into eight nodes, and 8-bit information indicating whether the eight nodes each include point clouds are generated. This processing is repeated until the number of point clouds per layer or node becomes smaller than or equal to a predetermined threshold.

Further, encoding device 100 may have functions of performing intra prediction and inter prediction, and may switch among using intra prediction, using inter prediction, and not using prediction, according to a predetermined condition.

As shown in FIG. 8, encoding device 100 includes transformer 101, subtractor 102, switcher 103, quantizer 104, arithmetic encoder 105, inverse quantizer 106, and first inter predictor 107.

Transformer 101 generates a transform coefficient by applying, for example, Haar transform to attribute information. This Haar transform may include processing of weighting an attribute value, so that the attribute value may be calculated with a weight. For example, the weight is generated based on information on the presence or absence of points or nodes in an RAHT tree.

Subtractor 102 calculates a difference value (also referred to as a prediction residual or a residual value), which is the difference between the transform coefficient generated by transformer 101 and a first predicted value generated by first inter predictor 107. Switcher 103 receives input of the transform coefficient output from transformer 101 and the difference value output from subtractor 102. Switcher 103 determines whether inter prediction is used. If inter prediction is used, switcher 103 outputs the difference value to quantizer 104. If inter prediction is not used, switcher 103 outputs the transform coefficient to quantizer 104.

Quantizer 104 quantizes the transform coefficient or the difference value to generate a quantized coefficient. Arithmetic encoder 105 arithmetically encodes the quantized coefficient to generate a bitstream (encoded data). It is to be noted that the quantized coefficient may be binarized before being arithmetically encoded. In addition, encoding device 100 may generate various sorts of header information and store the generated header information in the bitstream. Further, the header information may be arithmetically encoded before being stored in the bitstream. Inverse quantizer 106 inverse-quantizes the quantized coefficient to recover the transform coefficient or the difference value.

First inter predictor 107 includes switcher 111, adder 112, and frame buffer 113. When inter prediction is used, switcher 111 outputs the difference value obtained by inverse quantizer 106 to adder 112. When inter prediction is not used, switcher 111 outputs the transform coefficient obtained by inverse quantizer 106 to frame buffer 113. Adder 112 adds up the difference value and the first predicted value to generate a transform coefficient and outputs the generated transform coefficient to frame buffer 113. The first predicted value is read from frame buffer 113.

Frame buffer 113, which is a memory storing the transform coefficients of encoded and decoded three-dimensional points, stores transform coefficients output from switcher 111 or adder 112. For example, frame buffer 113 stores transform coefficients for one frame or one data unit. It is to be noted that frame buffer 113 may store transform coefficients for multiple frames or multiple data units. First inter predictor 107 generates the first predicted value using a transform coefficient stored in frame buffer 113. For example, a transform coefficient stored in frame buffer 113 is output as the first predicted value.

FIG. 9 is a block diagram illustrating the configuration of decoding device 200 according to the present embodiment. Decoding device 200 generates the attribute values of three-dimensional points in point cloud data by decoding a bitstream generated by, for example, encoding device 100 shown in FIG. 8.

It is to be noted that, although the diagram here illustrates only processing units related to the decoding of the attribute values of three-dimensional points in point cloud data, decoding device 200 may include other processing units, such as a processing unit that decodes geometry information on three-dimensional points. For example, decoding device 200 may decode the geometry information using an octree. Further, decoding device 200 may have functions of performing intra prediction and inter prediction, and may switch among using intra prediction, using inter prediction, and not using prediction, according to a predetermined condition.

As shown in FIG. 9, decoding device 200 includes arithmetic decoder 201, inverse quantizer 202, switcher 203, adder 204, inverse transformer 205, and first inter predictor 206.

Arithmetic decoder 201 arithmetically decodes the bitstream to generate a quantized coefficient. It is to be noted that arithmetic decoder 201 may decode various sorts of header information from the bitstream.

Inverse quantizer 202 inverse-quantizes the quantized coefficient obtained by arithmetic decoder 201 to generate a transform coefficient or a difference value. Switcher 203 determines whether inter prediction is used. If inter prediction is used, switcher 203 outputs the difference value obtained by inverse quantizer 202 to adder 204. If inter prediction is not used, switcher 203 outputs the transform coefficient obtained by inverse quantizer 202 to inverse transformer 205. It is to be noted that whether inter prediction is used or intra prediction is used is determined according to, for example, control information in the bitstream.

Adder 204 adds up the difference value and a first predicted value generated by first inter predictor 206 to generate a transform coefficient. Inverse transformer 205 applies inverse Haar transform to the transform coefficient output from switcher 203 or adder 204 to generate an attribute value. Further, this inverse Haar transform may include processing of removing the weight on the attribute value applied by Haar transform.

First inter predictor 206 includes frame buffer 207. Frame buffer 207 is a memory that stores the transform coefficients of decoded three-dimensional points. For example, frame buffer 207 stores transform coefficients for one frame or one data unit. It is to be noted that frame buffer 207 may store transform coefficients for multiple frames or multiple data units. First inter predictor 206 generates the first predicted value using a transform coefficient stored in frame buffer 207. For example, a transform coefficient stored in frame buffer 207 is output as the first predicted value.

[Inter prediction processing on transform coefficients]

FIG. 10 is a flowchart of inter prediction processing in encoding device 100. The processing illustrated in FIG. 10 is repeatedly performed for each node in the octree hierarchy in the current frame.

First, encoding device 100 performs RAHT on the current node (S121). Encoding device 100 then determines whether the depth (level) to which the current node belongs is within a predetermined depth of inter prediction (S122). If the depth to which the current node belongs is within the depth of inter prediction (Yes at S122), encoding device 100 determines to apply inter prediction to the current node. If the depth to which the current node belongs is not within the depth of inter prediction (No at S122), encoding device 100 determines not to apply inter prediction to the current node.

For example, because nodes belonging to shallower depths (higher levels) have transform coefficients corresponding to larger spaces, their transform coefficients are likely to have a high correlation between frames at different timepoints. Thus, the likeliness of a high correlation depends on the depth. Therefore, switching between using inter prediction and not using inter prediction depending on the depth may be able to improve the encoding performance.

Further, encoding device 100 may determine the depth of inter prediction (the range, upper limit, or lower limit of the depth) and store depth information indicating the determined depth in the bitstream. For example, the depth information may be stored in a Sequence Parameter Set (SPS), an Attribute Parameter Set (APS), or an Attribute Data Unit (ADU) header.

It is to be noted that an SPS is metadata (a parameter set) common to multiple frames. An APS is metadata (a parameter set) related to the encoding of attribute information (attribute values). For example, an APS is metadata common to multiple frames. An ADU is a data unit of encoded data of attribute information. An ADU header is the header (control information) of the ADU.

Further, encoding device 100 may determine the depth of inter prediction in advance, or adaptively according to the characteristics of the point cloud. A depth common to the entire sequence may be set, or different depths may be set for different frames or different divided data units.

It is to be noted that the node belonging to the highest layer may be defined as always inter-predicted, and the depth information may indicate the depth of inter prediction except the highest layer. In an example, the depth information may be information indicating the depth (the depth range), designating the number of depths counted from the shallowest depth. It is to be noted that the information indicating the depth (the depth range) may take other forms. For example, this information may designate the number of depths counted from the deepest depth.

If the depth to which the current node belongs is within the depth of inter prediction (Yes at S122), encoding device 100 determines whether the reference frame (the reference point cloud) includes a node at the same position as the current node (S123). If a node at the same position as the current node is included (Yes at S123), encoding device 100 determines to apply inter prediction. If no node is included at the same position as the current node (No at S123), encoding device 100 determines not to apply inter prediction.

As above, the reference frame may include no node at the same position as the current node due to differences in point cloud configuration between the current frame and the reference frame.

If encoding device 100 determines to apply inter prediction (Yes at S122 and Yes at S123), encoding device 100 applies inter prediction to the current node to encode the difference values between the transform coefficients and the predicted values (S124). Conversely, if encoding device 100 determines not to apply inter prediction (No at S122 or No at S123), encoding device 100 encodes the transform coefficients without applying inter prediction to the current node (S125).

After step S124 or S125, encoding device 100 stores the derived transform coefficients in the memory (frame buffer 113) (S126).

It is to be noted that, although the description here illustrates processing in encoding device 100, similar processing may be performed in decoding device 200 as well. In that case, "encode" in the above description may be replaced with "decode".

FIG. 11 is a diagram schematically illustrating an overview of the inter prediction processing. If encoding device 100 determines to apply inter prediction to the current node, encoding device 100 generates the difference values between transform coefficients $Coeff_{in(0)}$ to $Coeff_{in(7)}$ of the current node and the transform coefficients, stored in frame buffer 113, of a reference node corresponding to the current node and included in the reference frame, and entropy-encodes (arithmetically encodes) the difference values. It is to be noted that the reference node is a node referred to by the current node in inter prediction, for example a node at the same position as the current node.

It is to be noted that the entropy encoding may use different contexts for nodes to which inter prediction is applied and for nodes to which inter prediction is not applied. For example, a first context may be used for all the nodes to which inter prediction is applied, and a second context different from the first context may be used for all the nodes to which inter prediction is not applied. Because nodes to which inter prediction is applied have a high correlation between characteristics of values in the current node and those in the reference node, using the same context for such nodes may be able to improve the coding performance.

If the correlation between the transform coefficients of the current node and the transform coefficients of the reference node is high, the difference values are small. Encoding the small difference values may be able to improve the encoding efficiency. It is to be noted that the input values of RAHT correspond to the DC components of RAHT performed on the child node group. Further, the output values of RAHT correspond to the transform coefficients of the current node or the frequency components of the current node. Therefore, the transform coefficients of the current node may be expressed as the frequency components of the current node, or the transform coefficients of the DC components of RAHT performed on the child node group.

It is to be noted that, although FIG. 11 illustrates a case in which all the nodes are present, some of the nodes may be absent depending on the point cloud configuration.

Now, the following will describe an exemplary method of determining whether the reference frame includes a node at the same position as the current node at step S123 in FIG. 10.

For example, the memory (e.g., frame buffer 113) stores the RAHT output values of the nodes in the reference frame, and the geometry information (or a Morton code) on the nodes. In this case, encoding device 100 searches the data stored in the memory to determine whether the reference frame includes a node having the same geometry information (or a Morton code) as the current node in the current frame. This allows encoding device 100 to determine whether the reference frame includes a node at the same position as the current node. Alternatively, each geometry information item may be assigned a predetermined memory location (address in the memory) for storage. In this case, encoding device 100 may determine whether the reference frame includes a node at the same position as the current node by determining whether the memory location corresponding to the geometry information on the current node has data.

For example, encoding device 100 may determine whether a node is at the same position as the current node by determining whether the layer and the position of the node match those of the current node. FIG. 12 is a diagram for describing this determination method.

The match or mismatch between the layers and positions may be determined using Morton code, for example. Morton code, which is a method of representing a three-dimensional space one-dimensionally, indicates the three-dimensional position relationship in each layer in three bits. Letting depth be the layer and depthNum be the number of layers in a node tree, the position pos can be expressed with mortonCode as follows.

$$\text{pos} = \text{mortonCode} >> ((\text{depthNum} - \text{depth}) \times 3)$$

Here, the match between the layers means that the size of the space corresponding to the current node is the same as the size of the space corresponding to a node in the reference frame. Further, the match in Morton code between the matching layers means that the sizes of the spaces are the same and the positions of the spaces are also the same.

That is, to predict transform coefficients corresponding to the specific spatial position and spatial size of the point cloud in the current frame, encoding device 100 searches for transform coefficients corresponding to these spatial position and spatial size in the reference frame and uses the retrieved transform coefficients as predicted values. This enables prediction from highly correlated transform coefficients to improve the encoding efficiency.

Now, a method of determining whether to apply inter prediction to each transform coefficient will be described. The presence or absence of the eight transform coefficients of the current node may depend on the presence or absence of the child nodes of the current node. Thus, even if information on a node at the same position as the current node is stored in the memory (e.g., frame buffer 113), the node might not have all the transform coefficients corresponding to the current node.

As such, encoding device 100 may determine, for each transform coefficient corresponding to the current node, whether the node in the reference frame has that transform coefficient, and if so, calculate a difference value. It is to be noted that, for a lack of a transform coefficient of the node in the reference frame, encoding device 100 may store the value 0 as the transform coefficient in the memory, and calculate the difference values irrespective of whether the node in the reference frame has all the corresponding transform coefficients.

It is to be noted that, if the presence or absence of all the transform coefficients matches between the current node in the current frame and the node in the reference frame, inter prediction may be applied; if the presence or absence of at least some of the transform coefficients does not match, no inter prediction may be applied.

Further, encoding device 100 may apply inter prediction to only some of the transform coefficients of the current node and not to the rest of the transform coefficients. For example, prediction may be applied to only the transform coefficients of a predetermined frequency component. Alternatively, encoding device 100 may take a predetermined manner to adaptively switch the frequency component of coefficients to which prediction is to be applied.

For example, applying prediction to low-frequency components tends to improve their encoding efficiency. Therefore, encoding device 100 may apply prediction to low-frequency components while applying no prediction to high-frequency components. This may be able to maximize the effect while reducing the processing load and the amount of data to be stored in the buffer. However, in some cases, encoding device 100 may apply prediction to high-frequency components while applying no prediction to low-frequency components.

If the reference frame includes no node or transform coefficients corresponding to the current node, encoding device 100 may perform inter prediction using the transform coefficients of a neighboring node in the neighborhood of the corresponding position. Alternatively, encoding device 100 may generate predicted values by performing processing, such as interpolation or averaging, on the transform coefficients of multiple neighboring nodes.

Now, data buffered in the memory (e.g., frame buffer 113) will be described. Data stored in the memory may be transform coefficients after RAHT, transform coefficients after being quantized and inverse-quantized, transform coefficients after being quantized and before being inverse-quantized (quantized coefficients), or attribute values resulting from performing inverse RAHT on transform coefficients.

Storing attribute values resulting from inverse RAHT requires performing RAHT again in inter prediction and therefore increases the processing load, but advantageously allows other processes to use attribute values before being subjected to RAHT.

In contrast, storing transform coefficients advantageously eliminates the need for RAHT in inter prediction, reducing the processing load.

Storing transform coefficients after being quantized and before being inverse-quantized (quantized coefficients) in memory can reduce the amount of data stored in the memory.

As memory areas for storing the data, data storage areas may be allocated for all the nodes, or for only existing nodes. The latter manner can reduce the data storage areas used.

Further, as memory areas for storing the data, data storage areas may be allocated for all the transform coefficients, or for only existing transform coefficients. The latter manner can reduce the data storage areas used.

FIG. 13 is a diagram illustrating an example of reference frame data stored in the memory. In FIG. 13, the memory stores, for each node, the layer "depth" and the geometry information "pos" of the node along with the transform coefficients "coeff" of the node. It is to be noted that, if attribute values have multiple components or if three-dimensional points have multiple attribute value types, respective sets of transform coefficients are stored. An exemplary attribute value having multiple components is an attribute value of color information with three components (e.g., the R, G, and B components). Exemplary multiple attribute value types are color information, reflectance, and information on the normal.

It is to be noted that the transform coefficients in FIG. 13 are represented as coeff[j][i], where j is 0 to N - 1, and N is determined by the number of components and the number of attribute value types as described above. For example, N for attribute values of color information may be 3, which is the number of color information components. Further, N for attribute values of color information and reflectance may be 4, which is the sum of the number of color information components and the number of reflectance component. It is to be noted that the types and the components may be represented as individual parameters. Further, i is 0 to 7, corresponding to the eight frequency components of the transform coefficients.

It is to be noted that a Morton code may be stored instead of the layer "depth" and the geometry information "pos". In that case, encoding device 100 can use the Morton code to calculate the layer "depth" and the geometry information "pos".

The memory may be in the single-buffer configuration, or may be in the double-buffer configuration that allows simultaneous (asynchronous) saving processing and reference processing. In the double-buffer configuration, the buffer used may be switched upon frame change.

Further, the memory may store each transform coefficient irrespective of whether the transform coefficient is valid or invalid, and further store a flag indicating whether the transform coefficient is valid or invalid. Encoding device 100 may refer to the flag to determine whether the transform coefficient is valid or invalid.

[Example of syntax]

An example of syntax and semantics will be described. FIG. 14 is a diagram illustrating an example of syntax of an APS. As shown in FIG. 14, the APS includes inter_raht_prediction_enabled and depth.

The flag inter_raht_prediction_enabled indicates whether inter prediction is applied to the attribute values (the transform coefficients after RAHT). In other words, this flag indicates whether the inter prediction scheme is enabled.

If inter_raht_prediction_enabled indicates that the inter prediction scheme is applied, the APS includes depth, which is information indicating the depth down to which inter prediction is applied. As an example, inter prediction may be set to be always applied to the highest layer, and depth may indicate "(the depth down to which inter prediction is applied) - 1". As another example, inter-prediction may be applied to the layers higher than the depth indicated by depth (or not lower than the depth - 1), and no inter-prediction may be applied to the layers not higher than the depth indicated by depth (or lower than the depth - 1).

It is to be noted that encoding device 100 may determine whether to apply inter prediction to a frame or slice by combining inter_raht_prediction_enabled with other conditions, such as whether the frame or slice is a random access point and whether inter prediction is applied to geometry information. In that case, an ADUH may store a flag indicating whether inter prediction of attribute values is applied to the corresponding data unit. That is, the information on inter prediction of attribute values may be stored on a sequence basis, a frame basis, a slice basis, or a combination thereof.

If whether to apply inter prediction is switched on a frame or slice basis, the above-described inter prediction processing on a frame or slice basis is performed.

[Variations]

It is to be noted that, although the above description illustrates an example of referring to a frame or slice at a timepoint different from that of the current frame or slice, a frame or slice at the same timepoint as the current frame or slice may be referred to. For example, for referring to a slice at the same timepoint as the current slice, a node at the same depth and position as the current node may be referred to. Alternatively, a node estimated to have a high correlation may be referred to, such as the parent node of or a neighboring node of the node at the same depth and position as the current node.

Further, an attribute value different from and highly correlated with the current attribute value may be referred to. For example, if multiple attribute values with different parallaxes or viewpoints exist, an attribute value with a parallax or viewpoint different from that of the current attribute value may be referred to. Further, if attribute values have multiple components, a component different from and highly correlated with the current component being processed may be referred to. It is to be noted that the above attribute value or component referred to may be included in a frame or slice at a timepoint different from that of the current frame or slice, or in a frame or slice at the same timepoint as the current frame or slice.

Thus, in inter prediction, the encoding device and the decoding device according to the present embodiment refer to a node whose layer and position match those of the current node. This is equivalent to using information at the same spatial position for prediction, so that the transform coefficients are expected to have properties similar to those of the current node. This improves the prediction efficiency.

In addition, as long as a node whose layer and position match those of the current node can be searched for, the reference frame does not need to have an RAHT tree configuration that is spatially identical to that of the current frame. This increases the degree of freedom of reference and is expected to improve the prediction efficiency. That is, effective inter prediction will be achieved due to the ability to perform inter prediction on the current node even if the current and reference nodes have different child node configurations.

[Embodiment 2]

[Overview]

The present embodiment will describe a method of inter prediction processing on attribute values that involves motion compensation. By motion compensation in inter prediction of transform coefficients after RAHT, positions are corrected based on movements between the current frame and the reference frame.

In an example, for the current point cloud (e.g., the current frame) and the reference point cloud (e.g., the reference frame), the encoding device corrects the geometry information on at least one of these point clouds so that their correlation increases. For example, if there is a movement between the point clouds in frames at different timepoints, the encoding device corrects the geometry information on one of the current and reference point clouds based on motion information such as a motion vector. Further, if the current point cloud and the reference point cloud are different in position or viewpoint direction, the encoding device may correct the geometry information on one of the current and reference point clouds based on positional difference information such as a spatial vector.

In the present embodiment, the encoding device is configured with the ability to switch between first inter prediction and second inter prediction. The first inter prediction is an inter prediction scheme without motion compensation, for example the inter prediction scheme described above in Embodiment 1.

The second inter prediction is an inter prediction scheme with motion compensation. In the second inter prediction, the encoding device corrects the geometry information on the reference point cloud so that the correlation between the current point cloud and the reference point cloud increases. Specifically, the encoding device corrects the geometry information on the reference point cloud and, using the corrected geometry information on points, performs RAHT on attribute values to generate transform coefficients. The generated transform coefficients are used as predicted values.

[Configuration of encoding device and decoding device]

FIG. 15 is a block diagram illustrating the configuration of encoding device 100A according to the present embodiment. As shown in FIG. 15, encoding device 100A includes transformer 101, subtractor 102, switcher 103, quantizer 104, arithmetic encoder 105, inverse quantizer 106, first inter predictor 107, switchers 121 and 122, and second inter predictor 123. It is to be noted that components similar to those in encoding device 100 shown in FIG. 8 are labeled with the same symbols, and the following mainly describes differences from encoding device 100 shown in FIG. 8.

Switchers 121 and 122 are switches for switching between the first inter prediction and the second inter prediction. When the first inter prediction is used, switcher 121 outputs, to first inter predictor 107, the transform coefficient or the difference value output from inverse quantizer 106. When the second inter prediction is used, switcher 121 outputs, to second inter predictor 123, the transform coefficient or the difference value output from inverse quantizer 106.

When the first inter prediction is used, switcher 122 outputs, as a third predicted value, the first predicted value generated by first inter predictor 107 to subtractor 102. When the second inter prediction is used, switcher 122 outputs, as the third predicted value, a second predicted value generated by second inter predictor 123 to subtractor 102. Subtractor 102 calculates a difference value, which is the difference between the transform coefficient generated by transformer 101 and the third predicted value output from switcher 122.

Second inter predictor 123 includes switcher 131, adder 132, inverse transformer 133, frame buffer 134, switcher 135, motion compensator 136, switcher 137, and transformer 138.

When inter prediction (the second inter prediction) is used, switcher 131 outputs the difference value obtained by inverse quantizer 106 to adder 132. When inter prediction is not used, switcher 131 outputs the transform coefficient obtained by inverse quantizer 106 to inverse transformer 133. Adder 132 adds up the difference value and the second predicted value to generate a transform coefficient, and outputs the generated transform coefficient to inverse transformer 133.

Inverse transformer 133 reproduces the attribute value by performing inverse RAHT (e.g., inverse Haar transform) on the transform coefficient output from switcher 131 or adder 132. Here, the transform coefficient corresponds to a node in an RAHT tree structure, whereas the reproduced attribute value corresponds to geometry information per point.

Frame buffer 134 is a memory that stores the attribute values of encoded and decoded three-dimensional points. For example, frame buffer 134 stores attribute values for one frame or one data unit. It is to be noted that frame buffer 134 may store attribute values for multiple frames or multiple data units.

Switchers 135 and 137 are switches for switching between performing motion compensation and not performing motion compensation. When motion compensation is performed, switcher 135 outputs an attribute value stored in frame buffer 134 to motion compensator 136, and switcher 137 outputs the motion-compensated attribute value generated by motion compensator 136 to transformer 138. When motion compensation is not performed, an attribute value stored in frame buffer 134 (an attribute value not motion-compensated) is output to transformer 138.

Motion compensator 136 performs position correction (motion compensation) using an inter-frame motion vector detected by a motion vector detector (not shown). The motion vector is determined based on, for example, a change in reference position between frames. It is to be noted that frame buffer 134 may store motion-compensated attribute values. Alternatively, second inter predictor 123 may further include a frame buffer that stores motion-compensated attribute values. It is to be noted that the motion compensation corrects geometry information corresponding to the attribute value. Thus, for example, a node determined to be at the same position as the current node is adjusted.

Transformer 138 applies RAHT (e.g., Haar transform) to the attribute value to generate a transform coefficient. This RAHT is similar to, for example, RAHT performed by transformer 101. For example, this transform coefficient is output as the second predicted value.

It is to be noted that, although the example here illustrates that encoding device 100A switches between the first inter prediction and the second inter prediction, encoding device 100A may have a function of performing only the second inter prediction.

When the first inter prediction is used, a transform coefficient stored in the memory can be used directly for prediction, eliminating the need for transform processing for prediction. This enables an inter prediction function in a simple configuration and can also reduce the processing load.

When the second inter prediction is used, the geometry information on the attribute value can be corrected. For example, for a position shift in the point cloud due to a movement, motion compensation allows readily applying spatial correction processing between frames. This is expected to improve the prediction accuracy even for a sequence with a large movement.

Further, if frames are divided into multiple slices or tiles for processing, point clouds in different divided data units may be at different spatial positions. In such a case, the ability to correct the geometry information facilitates combining the divided data units. That is, the entire data before division can be reproduced and used as reference attribute information.

It is to be noted that the memory that stores attribute values may store motion-compensated attribute values, or attribute values corrected for improved prediction accuracy, or may store attribute values before being motion-compensated or corrected.

FIG. 16 is a block diagram illustrating the configuration of decoding device 200A according to the present embodiment. Decoding device 200A generates the attribute values of three-dimensional points in point cloud data by decoding a bitstream generated by, for example, encoding device 100A shown in FIG. 15.

As shown in FIG. 16, decoding device 200A includes arithmetic decoder 201, inverse quantizer 202, switcher 203, adder 204, inverse transformer 205, first inter predictor 206, switchers 211, 212, 214, and 215, and second inter predictor 213. It is to be noted that components similar to those in decoding device 200 shown in FIG. 9 are labeled with the same symbols, and the following mainly describes differences from decoding device 200 shown in FIG. 9.

Switcher 211 is a switch for switching between using inter prediction and not using inter prediction (between inter prediction and intra prediction). When inter prediction is used, switcher 211 outputs the transform coefficient generated by adder 204 to inverse transformer 205 and switcher 214. When inter prediction is not used, switcher 211 outputs the transform coefficient output from switcher 203 (the transform coefficient obtained by inverse quantizer 202) to inverse transformer 205 and switcher 214.

Switchers 212, 214, and 215 are switches for switching between the first inter prediction and the second inter prediction. When the first inter prediction is used, switcher 214 outputs the transform coefficient output from switcher 211 (the transform coefficient generated by adder 204) to first inter predictor 206. When the second inter prediction is used, switcher 215 outputs the attribute value generated by inverse transformer 205 to second inter predictor 213.

When the first inter prediction is used, switcher 212 outputs, as a third predicted value, the first predicted value generated by first inter predictor 206 to adder 204. When the second inter prediction is used, switcher 212 outputs, as the third predicted value, a second predicted value generated by second inter predictor 213 to adder 204. Adder 204 adds up the difference value generated by inverse quantizer 202 and the third predicted value output from switcher 212 to generate a transform coefficient.

Second inter predictor 213 includes frame buffer 221, switcher 222, motion compensator 223, switcher 224, and transformer 225.

Frame buffer 221 is a memory that stores the attribute values of decoded three-dimensional points. For example, frame buffer 221 stores attribute values for one frame or one data unit. It is to be noted that frame buffer 221 may store attribute values for multiple frames or multiple data units.

Switchers 222 and 224 are switches for switching between performing motion compensation and not performing motion compensation. When motion compensation is performed, switcher 222 outputs an attribute value stored in frame buffer 221 to motion compensator 223, and switcher 224 outputs the motion-compensated attribute value generated by motion compensator 223 to transformer 225. When motion compensation is not performed, an attribute value stored in frame buffer 221 (an attribute value not motion-compensated) is output to transformer 225.

Motion compensator 223 performs position correction (motion compensation) using an inter-frame motion vector. For example, information indicating the motion vector is included in the bitstream, and motion compensator 223 performs motion compensation using the motion vector obtained from the bitstream. It is to be noted that frame buffer 221 may store motion-compensated attribute values. Alternatively, second inter predictor 213 may further include a frame buffer that stores motion-compensated attribute values.

Transformer 225 applies RAHT (e.g., Haar transform) to the attribute value to generate a transform coefficient.

This RAHT is similar to, for example, RAHT performed by transformer 138. For example, this transform coefficient is output as the second predicted value.

It is to be noted that, although the example here illustrates that decoding device 200A switches between the first inter prediction and the second inter prediction, decoding device 200A may have a function of performing only the second inter prediction.

Further, encoding device 100A may store, in metadata such as an SPS, APS or ADUH, a flag indicating which of the first inter prediction and the second inter prediction is used. Decoding device 200A may switch between the first inter prediction and the second inter prediction based on the flag stored in the metadata.

[Motion compensation processing]

The processing of performing motion compensation on three-dimensional points corresponding to attribute values will be described. FIG. 17 is a diagram illustrating an example of position correction processing performed on a reference point cloud. The example in FIG. 17 shows that the current frame, frame #x, refers to frame #x - 1. Further, frame #x - 1 is divided into slices (regions #1 and #2) and encoded. The decoding device decodes point clouds on a slice basis. Frame #x is divided into slices (regions #3 and #4) and encoded. For example, region #3 refers to region #1, and region #4 refers to region #2.

As shown in the left and center figures of frame #x - 1 in FIG. 17, the three-dimensional points in the point clouds in the respective slices are shifted to their original positions in the divided regions of the respective slices and combined into the original point cloud. As shown in the right figure of frame #x - 1 in FIG. 17, if motion compensation is necessary for inter prediction, position correction for inter-frame motion compensation is further performed.

Prediction may be switched between the first inter prediction and the second inter prediction based on whether the above-described position correction (motion compensation) is necessary. As an example, prediction may be switched between the first inter prediction and the second inter prediction based on the presence or absence of movements or motion vectors in the sequence. As another example, encoding device 100A may use the first inter prediction for a scene with a small movement, and use the second inter prediction for a scene with a large movement.

Further, encoding device 100A may use the first inter prediction for a sequence or content with few movements, and use the second inter prediction for a sequence or content with many movements. In this manner, encoding device 100A may switch prediction on a sequence or content basis.

In a further example, whether motion compensation is effective may depend on point cloud characteristics. In such a case, encoding device 100A may switch between the first inter prediction and the second inter prediction based on the characteristics of the current point cloud.

For example, if the current point cloud is a sparse point cloud (a point cloud with a low point density), encoding device 100A may determine that motion compensation would provide small effect and may use the first inter prediction. If the current point cloud is a dense point cloud (a point cloud with a high point density), encoding device 100A may determine that motion compensation would provide great effect and may use the second inter prediction. For example, the second inter prediction may be used for encoding a dense point cloud with a large number of points generated beforehand by merging point clouds in multiple frames.

It is to be noted that encoding device 100A may use the second inter prediction for a sparse point cloud if motion compensation is effective for the sparse point cloud. Other point cloud characteristics that may be referred to include the content type and the point cloud generation method.

Further, encoding device 100A may switch between the first inter prediction and the second inter prediction based on whether position correction is necessary for divided point clouds (tiles or slices). For example, if a frame includes only one slice, encoding device 100A may determine that position correction of divided point clouds is unnecessary and apply the first inter prediction. Conversely, if multiple divided point clouds are included, encoding device 100A may use the second inter prediction.

Alternatively, encoding device 100A may fix the positions or origins of divided point clouds across multiple frames. Specifically, the regions of the divided point clouds in the reference frame are set to coincide with the regions of the divided point clouds in the current frame. This eliminates the need for position correction, because the regions of the divided point clouds in the reference frame always coincides with those in the current frame. In this case, encoding device 100A may apply the first inter prediction. That is, encoding device 100A may determine whether the positions or origins of the divided point clouds are fixed across frames, and if so, apply the first inter prediction, and if not, apply the second inter prediction.

It is to be noted that whether to switch to the first inter prediction or the second inter prediction, or whether to perform position correction, may be determined by encoding device 100A on a point cloud data basis or on a divided data unit basis.

Further, position correction of a node may be performed without performing inverse transform on the transform coefficients. For example, encoding device 100A may detect a motion vector, use the motion vector to determine where the position of a node in the RAHT tree shifts, and update the position of the node. FIG. 18 is a diagram illustrating an example of a position shift of a node in an RAHT tree. FIG. 19 is a diagram illustrating three-dimensional regions corresponding to the RAHT tree illustrated in FIG. 18.

For example, as shown in FIG. 18, a node is shifted to another position in the RAHT tree. This position shift is calculated based on a motion vector. Thus, the RAHT tree can be updated to correspond to the three-dimensional regions in FIG. 19 resulting from position correction performed based on the motion vector.

It is to be noted that, if the RAHT tree structure of the reference frame cannot represent the position-shifted node, encoding device 100A may expand the hierarchy of the RAHT tree structure to increase higher layers.

This position shift changes the structure of the RAHT tree from the structure before the position shift. Further, the ability to buffer data simply as transform coefficients is expected to provide the above-described effect.

[Example of syntax]

An example of syntax and semantics will be described. FIG. 20 is a diagram illustrating an example of syntax of an APS. As shown in FIG. 20, the APS includes inter_raht_prediction_enabled, depth, raht_inter_prediction_type, and reference_position_compensate.

The flag inter_raht_prediction_enabled indicates whether inter prediction is applied to the attribute values (the transform coefficients after RAHT). In other words, this flag indicates whether the inter prediction scheme is enabled.

If inter_raht_prediction_enabled indicates that the inter prediction scheme is applied, the APS includes depth, raht_inter_prediction_type, and reference_position_compensate.

The element depth is information indicating the depth down to which inter prediction is applied, as with depth illustrated in FIG. 14, for example. The flag raht_inter_prediction_type indicates which of the first inter prediction and the second inter prediction is applied. The flag reference_position_compensate indicates whether position correction (motion compensation) of the reference point cloud is performed.

It is to be noted that the above information on inter prediction of the attribute values may be stored on a sequence basis, a frame basis, a slice basis, or a combination thereof.

In addition, in the above-described description, point cloud data is listed as an example of three-dimensional data to be processed, but the technique of the present embodiment can be applied to other three-dimensional data such as mesh data. Mesh data (also called three-dimensional mesh data) is a data format used in CG (Computer Graphics), and is a collection of surface data that indicates the three-dimensional shape of an object. Mesh data includes point-cloud information (for example, vertex information). Therefore, for example, when encoding mesh data generated from point cloud data, the technique of the present embodiment can be applied to encoding of this point cloud information.

[Conclusion]

A decoding device (three-dimensional data decoding device) according to an embodiment, performs the process illustrated in FIG. 21. The decoding device: calculates a predicted value of a first coefficient (for example, a transform coefficient) of a first node included in a first tree structure of a current coding unit (for example, a current frame or a current slice) by referring to a reference coding unit (for example, a reference frame or a reference slice) (S201); obtains a residual value (for example, a difference value or a prediction residual) of the first coefficient from a bitstream (S202); calculates the first coefficient, based on the predicted value and the residual value (S203); performs inverse hierarchical transform (for example, inverse RAHT or inverse Haar transform) on the first coefficient (S204); and calculates an attribute value of a three-dimensional point included in the current coding unit, based on a result of the inverse hierarchical transform (S205).

Accordingly, since inter prediction accuracy can be improved when a coefficient correlation exists between coding units, encoding efficiency can be improved.

For example, the inverse hierarchical transform is inverse transform of hierarchical transform applied to two coefficients of two nodes that are adjacent in order to calculate a coefficient of an upper node positioned above the two nodes. In such a hierarchical transform, a coefficient correlation tends to exist between coding units. Accordingly, since inter prediction accuracy can be improved, encoding efficiency can be improved.

It should be noted that, although hierarchical transform has been exemplified by RAHT and Haar transform in the foregoing embodiments, hierarchical transform is not limited to these. As long as the coefficient of an upper layer represents the main component of the coefficient of a lower layer, other transforms may be used as a hierarchical transform. For example, hierarchical transform in which the main component is calculated from transform coefficients or attribute values of all nodes belonging to a layer, and the calculated main component is adopted as an input value of an upper layer.

For example, in the calculating of the predicted value (S201), a second node included in a second tree structure of the reference coding unit is referred to, and a second position of the second node in the second tree structure is the same as a first position of the first node in the first tree structure. Accordingly, by referring to the second node that is at a position that is the same as the position of the first node and for which the possibility that a coefficient correlation exists between coding units is high, inter prediction accuracy can be improved. Therefore, encoding efficiency can be improved.

For example, in the calculating of the predicted value (S201), a second node included in a second tree structure of the reference coding unit is referred to, and a difference between a second position of the second node in the second tree structure and a first position of the first node in the first tree structure is smaller than a predetermined threshold. Accordingly, by referring to the second node that is at a position close to the position of the first node and for which the possibility that a coefficient correlation exists between coding units is high, prediction accuracy can be improved. Therefore, encoding efficiency can be improved.

For example, the first position and the second position are represented by a Morton code. Accordingly, the second node that is at a position that is the same or close to the position of the first node can be easily searched for by using the Morton code.

For example, in the hierarchical transform, a value of a low-frequency component and a value of a high-frequency component are generated, the low-frequency component corresponds to the first coefficient, and the value of the high-frequency component is not predicted. Accordingly, by using prediction on a low-frequency component for which prediction accuracy tends to increase, encoding efficiency can be improved. Furthermore, by not using prediction on a high-frequency component, the processing amount can be reduced.

For example, the decoding device further: stores the first coefficient in a buffer memory (for example, frame buffer 207) in order to calculate a predicted value of a coefficient of another node. Accordingly, the decoding device can use the first coefficient stored in the buffer memory in the prediction of a coefficient of another node.

For example, the decoding device further: obtains a quantized value generated by quantizing the first coefficient (for example, obtains a quantized value from the bitstream); and storing the quantized value in a buffer memory (for example, frame buffer 207) without inverse-quantizing the quantized value, in order to calculate a predicted value of another node. Accordingly, the data amount of data to be stored in a memory can be reduced.

For example, the referring is performed per node. Accordingly, even if coding unit correlation as a whole is not high, prediction can be applied when partial correlation is high, and thus coding efficiency can be improved.

For example, in the calculating of the predicted value (S201): a second node included in a second tree structure of the reference coding unit is referred to; and the predicted value is calculated when a total number of coefficients of the first node and a total number of coefficients of the second node are the same. Accordingly, performance of erroneous prediction can be prevented.

For example, in the calculating of the predicted value, the predicted value is calculated when at least one of a total number of three-dimensional points included in the current coding unit, an arrangement of the three-dimensional points, a density of the three-dimensional points, or a depth of the first node in the first tree structure satisfies a predetermined condition. Accordingly, when the possibility that a coefficient correlation exists between coding units is low, the processing amount can be reduced by not performing prediction.

For example, when the predetermined condition is satisfied, the first coefficient may be stored in a buffer memory (for example, frame buffer 207) in order to calculate a predicted value of a coefficient of another node. Accordingly, the data amount of data to be stored in the memory can be reduced.

For example, in the calculating of the predicted value (S201), the predicted value is calculated by performing motion compensation on the reference coding unit, and referring to the reference coding unit that has been motion compensated. Accordingly, prediction accuracy can be improved in the case where there is movement between coding units, and thus encoding efficiency can be improved.

For example, the decoding device further: stores the attribute value calculated in the buffer memory (for example, frame buffer 221) in order to calculate a predicted value of a coefficient of another node. Accordingly, the decoding device can use the attribute value stored in the buffer memory in the prediction of a coefficient of another node.

For example, a decoding device: calculates a predicted value of a first coefficient (for example, a transfer coefficient) of a first node included in a current coding unit (for example, a current frame or a current slice) by referring to a reference coding unit (for example a reference frame or a reference slice); obtains a residual value (for example a difference value or a prediction residual) of the first coefficient from a bitstream; calculates the first coefficient, based on the predicted value and the residual value; and performing an inverse transform process (for example, inverse RAHT or inverse Haar transform) on the first coefficient to calculate an attribute value of a three-dimensional point included in the current coding unit. The first coefficient is generated by a transform process (for example, RAHT or Haar transform) executed by an encoding device, the transform process transforming the attribute value into the first coefficient.

Accordingly, since prediction accuracy can be improved when a coefficient correlation exists between coding units, encoding efficiency can be improved.

For example, in the calculating of the predicted value, the decoding device calculates the predicted value by: calculating an attribute value of the reference coding unit by performing the inverse hierarchical transform on a second coefficient of the reference coding unit; performing motion compensation on the attribute value of the reference coding unit; and performing hierarchical transform on the attribute information of the reference coding unit that has been motion-compensated.

FIG. 22 is a block diagram of decoding device 10. For example, decoding device 10 includes processor 11 and memory 12, and processor 11 performs the above-described processes using memory 12.

Furthermore, an encoding device (three-dimensional data encoding device) according to an embodiment performs the process illustrated in FIG. 23. The encoding device: performs hierarchical transform (for example, RAHT or Haar transform) on an attribute value of a three-dimensional point included in a current coding unit (for example, a current frame or a current slice) to calculate a first coefficient (for example, a transform coefficient) of a first node included in a first tree structure of the current coding unit (S211);

calculates a predicted value of the first coefficient by referring to a reference coding unit (for example, a reference frame or a reference slice) (S212); calculates a residual value (for example, a difference value or a prediction residual) that is a difference between the first coefficient and the predicted value (S213); and generates a bitstream including the residual value (S214).

Accordingly, since inter prediction accuracy can be improved when a coefficient correlation exists between coding units, encoding efficiency can be improved.

For example, the hierarchical transform is hierarchical transform applied to two coefficients of two nodes that are adjacent in order to calculate a coefficient of an upper node positioned above the two nodes. In such a hierarchical transform, a coefficient correlation tends to exist between coding units. Accordingly, since prediction accuracy can be improved, encoding efficiency can be improved.

For example, in the calculating of the predicted value (S212), a second node included in a second tree structure of the reference coding unit is referred to, and a second position of the second node in the second tree structure is the same as a first position of the first node in the first tree structure. Accordingly, by referring to the second node that is at a position that is the same as the position of the first node and for which the possibility that a coefficient correlation exists between coding units is high, prediction accuracy can be improved. Therefore, encoding efficiency can be improved.

For example, in the calculating of the predicted value (S212), a second node included in a second tree structure of the reference coding unit is referred to, and a difference between a second position of the second node in the second tree structure and a first position of the first node in the first tree structure is smaller than a predetermined threshold. Accordingly, by referring to the second node that is at a position close to the position of the first node and for which the possibility that a coefficient correlation exists between coding units is high, prediction accuracy can be improved. Therefore, encoding efficiency can be improved.

For example, the first position and the second position are represented by a Morton code. Accordingly, the second node that is at a position that is the same or close to the position of the first node can be easily searched for by using the Morton code.

For example, in the hierarchical transform, a value of a low-frequency component and a value of a high-frequency component are generated, the low-frequency component corresponds to the first coefficient, and the value of the high-frequency component is not predicted. Accordingly, by using prediction on a low-frequency component for which prediction accuracy tends to increase, encoding efficiency can be improved. Furthermore, by not using prediction on a high-frequency component, the processing amount can be reduced.

For example, the encoding device further: stores the first coefficient in a buffer memory (for example, frame buffer 113) in order to calculate a predicted value of a coefficient of another node. Accordingly, the encoding device can use the first coefficient stored in the buffer memory in the prediction of a coefficient of another node.

For example, the encoding device further: generates a quantized value by quantizing the first coefficient; and storing the quantized value in a buffer memory (for example, frame buffer 113) without inverse-quantizing the quantized value, in order to calculate a predicted value of another node. Accordingly, the data amount of data to be stored in a memory can be reduced.

For example, the referring is performed per node. Accordingly, even if coding unit correlation as a whole is not high, prediction can be applied when partial correlation is high, and thus coding efficiency can be improved.

For example, in the calculating of the predicted value (S212): a second node included in a second tree structure of the reference coding unit is referred to; and the predicted value is calculated when a total number of coefficients of the first node and a total number of coefficients of the second node are the same. Accordingly, performance of erroneous prediction can be prevented.

For example, in the calculating of the predicted value, the predicted value is calculated when at least one of a total number of three-dimensional points included in the current coding unit, an arrangement of the three-dimensional points, a density of the three-dimensional points, or a depth of the first node in the first tree structure satisfies a predetermined condition. Accordingly, when the possibility that a coefficient correlation exists between coding units is low, the processing amount can be reduced by not performing prediction.

For example, when the condition is satisfied, the first coefficient may be stored in a buffer memory (for example, frame buffer 113) in order to calculate a predicted value of a coefficient of another node. Accordingly, the data amount of data to be stored in the memory can be reduced.

For example, in the calculating of the predicted value (S212), the predicted value is calculated by performing motion compensation on the reference coding unit, and referring to the reference coding unit that has been motion compensated. Accordingly, prediction accuracy can be improved in the case where there is movement between coding units, and thus encoding efficiency can be improved.

For example, the encoding device further: stores the attribute value in the buffer memory (for example, frame buffer 134) in order to calculate a predicted value of a coefficient of another node. Accordingly, the encoding device can use the attribute value stored in the buffer memory in the prediction of a coefficient of another node.

FIG. 24 is a block diagram of encoding device 20. For example, encoding device 20 includes processor 21 and memory 22, and processor 21 performs the above-described processes using memory 22.

An encoding device (three-dimensional data encoding device), a decoding device (three-dimensional data decoding device), and the like, according to embodiments of the present disclosure and variations thereof have been described above, but the present disclosure is not limited to these embodiments, etc.

Note that each of the processors included in the encoding device, the decoding device, and the like, according to the above embodiments is typically implemented as a large-scale integrated (LSI) circuit, which is an integrated circuit (IC). These may take the form of individual chips, or may be partially or entirely packaged into a single chip.

Such IC is not limited to an LSI, and thus may be implemented as a dedicated circuit or a general-purpose processor. Alternatively, a field programmable gate array (FPGA) that allows for programming after the manufacture of an LSI, or a reconfigurable processor that allows for reconfiguration of the connection and the setting of circuit cells inside an LSI may be employed.

Moreover, in the above embodiments, the constituent elements may be implemented as dedicated hardware or may be realized by executing a software program suited to such constituent elements. Alternatively, the constituent elements may be implemented by a program executor such as a CPU or a processor reading out and executing the software program recorded in a recording medium such as a hard disk or a semiconductor memory.

The present disclosure may also be implemented as an encoding method (three-dimensional data encoding method), a decoding method (three-dimensional data decoding method), or the like executed by the encoding device (three-dimensional data encoding device), the decoding device (three-dimensional data decoding device), and the like.

Furthermore, the present disclosure may be implemented as a program for causing a computer, a processor, or a device to execute the above-described encoding method or decoding method. Furthermore, the present disclosure may be implemented as a bitstream generated by the above-described encoding method. Furthermore, the present disclosure as a recording medium on which the program or the bitstream is recorded. For example, the present disclosure may be implemented as a non-transitory computer-readable recording medium on which the program or the bitstream is recorded.

Also, the divisions of the functional blocks shown in the block diagrams are mere examples, and thus a plurality of functional blocks may be implemented as a single functional block, or a single functional block may be divided into a plurality of functional blocks, or one or more functions may be moved to another functional block. Also, the functions of a plurality of functional blocks having similar functions may be processed by single hardware or software in a parallelized or time-divided manner.

Also, the processing order of executing the steps shown in the flowcharts is a mere illustration for specifically describing the present disclosure, and thus may be an order other than the shown order. Also, one or more of the steps may be executed simultaneously (in parallel) with another step.

An encoding device, a decoding device, and the like, according to one or more aspects have been described above based on the embodiments, but the present disclosure is not limited to these embodiments. The one or more aspects may thus include forms achieved by making various modifications to the above embodiments that can be conceived by those skilled in the art, as well forms achieved by combining constituent elements in different embodiments, without materially departing from the spirit of the present disclosure.

[Industrial Applicability]

The present disclosure is applicable to an encoding device and a decoding device.

[Reference Signs List]

10, 200, 200A decoding device
11, 21 processor
12, 22 memory
20, 100, 100A encoding device
101, 138, 225 transformer

102 subtractor
103, 111, 121, 122, 131,135, 137, 203, 211, 212, 214, 215, 222, 224 switcher
104 quantizer
105 arithmetic encoder
106, 202 inverse quantizer
107, 206 first inter predictor
112, 132, 204 adder
113, 134, 207, 221 frame buffer
123, 213 second inter predictor
133, 205 inverse transformer
136, 223 motion compensator
201 arithmetic decoder

**Claims**

1. A decoding method comprising:

    calculating a predicted value of a first coefficient of a first node included in a first tree structure of a current coding unit by using an inter prediction scheme referring to a reference coding unit;
    obtaining a residual value of the first coefficient from a bitstream;
    calculating the first coefficient, based on the predicted value and the residual value;
    performing inverse hierarchical transform on the first coefficient; and
    calculating an attribute value of a three-dimensional point included in the current coding unit, based on a result of the inverse hierarchical transform.

2. The decoding method according to claim 1, wherein
    the inverse hierarchical transform is inverse transform of hierarchical transform applied to two coefficients of two nodes that are adjacent in order to calculate a coefficient of an upper node positioned above the two nodes.

3. The decoding method according to claim 1, wherein

    in the calculating of the predicted value, a second node included in a second tree structure of the reference coding unit is referred to, and
    a second position of the second node in the second tree structure is same as a first position of the first node in the first tree structure.

4. The decoding method according to claim 1, wherein

    in the calculating of the predicted value, a second node included in a second tree structure of the reference coding unit is referred to, and
    a difference between a second position of the second node in the second tree structure and a first position of the first node in the first tree structure is smaller than a predetermined threshold.

5. The decoding method according to claim 3 or 4, wherein
    the first position and the second position are represented by a Morton code.

6. The decoding method according to claim 2, wherein

    in the hierarchical transform, a value of a low-frequency component and a value of a high-frequency component are generated,
    the low-frequency component corresponds to the first coefficient, and
    the value of the high-frequency component is not predicted.

7. The decoding method according to claim 1, further comprising:
    storing the first coefficient in a buffer memory in order to calculate a predicted value of a coefficient of another node.

8. The decoding method according to claim 1, further comprising:

obtaining a quantized value generated by quantizing the first coefficient; and
storing the quantized value in a buffer memory without inverse-quantizing the quantized value, in order to calculate a predicted value of another node.

9. The decoding method according to claim 1, wherein
the referring is performed per node.

10. The decoding method according to claim 1, wherein
in the calculating of the predicted value:

a second node included in a second tree structure of the reference coding unit is referred to; and
the predicted value is calculated when a total number of coefficients of the first node and a total number of coefficients of the second node are same.

11. The decoding method according to claim 1, wherein
in the calculating of the predicted value, the predicted value is calculated when at least one of a total number of three-dimensional points included in the current coding unit, an arrangement of the three-dimensional points, a density of the three-dimensional points, or a depth of the first node in the first tree structure satisfies a predetermined condition.

12. The decoding method according to claim 11, wherein
when the condition is satisfied, the first coefficient is stored in a buffer memory in order to calculate a predicted value of a coefficient of another node.

13. The decoding method according to claim 1, wherein
in the calculating of the predicted value, the predicted value is calculated by performing motion compensation on the reference coding unit, and referring to the reference coding unit that has been motion compensated.

14. The decoding method according to claim 13, further comprising:
storing the attribute value calculated in the buffer memory in order to calculate a predicted value of a coefficient of another node.

15. The decoding method according to claim 1, wherein
in the calculating of the predicted value, the predicted value is calculated by:

calculating an attribute value of the reference coding unit by performing the inverse hierarchical transform on a second coefficient of the reference coding unit;
performing motion compensation on the attribute value of the reference coding unit; and
performing hierarchical transform on the attribute information of the reference coding unit that has been motion-compensated.

16. A decoding method comprising:

calculating a predicted value of a first coefficient of a first node included in a current coding unit by using an inter prediction scheme that refers to a reference coding unit;
obtaining a residual value of the first coefficient from a bitstream;
calculating the first coefficient, based on the predicted value and the residual value; and
performing an inverse transform process on the first coefficient to calculate an attribute value of a three-dimensional point included in the current coding unit, wherein
the first coefficient is generated by a transform process executed by an encoding device, the transform process transforming the attribute value into the first coefficient.

17. An encoding method comprising:

performing hierarchical transform on an attribute value of a three-dimensional point included in a current coding unit to calculate a first coefficient of a first node included in a first tree structure of the current coding unit;
calculating a predicted value of the first coefficient by using an inter prediction scheme referring to a reference coding unit;
calculating a residual value that is a difference between the first coefficient and the predicted value; and

generating a bitstream including the residual value.

18. A decoding device comprising:

a processor; and
a memory, wherein
using the memory, the processor:

calculates a predicted value of a first coefficient of a first node included in a first tree structure of a current coding unit by using an inter prediction scheme referring to a reference coding unit;
obtains a residual value of the first coefficient from a bitstream;
calculates the first coefficient, based on the predicted value and the residual value;
performs inverse hierarchical transform on the first coefficient; and
calculates an attribute value of a three-dimensional point included in the current coding unit, based on a result of the inverse hierarchical transform.

19. An encoding device comprising:

a processor; and
a memory, wherein
using the memory, the processor:

performs hierarchical transform on an attribute value of a three-dimensional point included in a current coding unit to calculate a first coefficient of a first node included in a first tree structure of the current coding unit;
calculates a predicted value of the first coefficient by using an inter prediction scheme referring to a reference coding unit;
calculates a residual value that is a difference between the first coefficient and the predicted value; and
generates a bitstream including the residual value.

## FIG. 1

EP 4 645 864 A1

FIG. 2

EP 4 645 864 A1

## FIG. 3

Three-dimensional region of second node

Three-dimensional region of first node

## FIG. 4

Child node of current node

RAHT current node

FIG. 5

Layer L (RAHT input values)　　Layer L1　Layer L2　Layer L3 (RAHT output values)

$Coeff_{child0}(0)$　　　　　　　　　　　　　　　　　　　　　　　$Coeff_{in}(0)$

$Coeff_{child1}(0)$　　　　　　　　　　　　　　　　　　　　　　　$Coeff_{in}(1)$

$Coeff_{child2}(0)$　　　　　　　　　　　　　　　　　　　　　　　$Coeff_{in}(2)$

$Coeff_{child3}(0)$　　　　　　　　　　　　　　　　　　　　　　　$Coeff_{in}(3)$

$Coeff_{child4}(0)$　　　　　　　　　　　　　　　　　　　　　　　$Coeff_{in}(4)$

$Coeff_{child5}(0)$　　　　　　　　　　　　　　　　　　　　　　　$Coeff_{in}(5)$

$Coeff_{child6}(0)$　　　　　　　　　　　　　　　　　　　　　　　$Coeff_{in}(6)$

$Coeff_{child7}(0)$　　　　　　　　　　　　　　　　　　　　　　　$Coeff_{in}(7)$

# FIG. 6

```
                    ┌─────────────────┐
                    │ Start processing │
                    │  for each node   │
                    └─────────────────┘
                             │
                             ▼                    S101
                    ╱─────────────────╲
                   ╱   Condition for    ╲
                  ╱ performing intra RAHT ╲      No
                  ╲   prediction          ╱──────────────┐
                   ╲   satisfied         ╱               │
                    ╲      ?            ╱                │
                     ╲─────────────────╱                 │
                          │ Yes                          │
                          ▼           S102                ▼           S103
              ┌───────────────────────┐      ┌───────────────────────┐
              │  Intra RAHT prediction │      │     No prediction      │
              └───────────────────────┘      └───────────────────────┘
                          │                               │
                          ▼◄──────────────────────────────┘
                    ┌──────────┐
                    │   End    │
                    └──────────┘
```

# FIG. 7

```
                                                          S101
                    ┌──────────┐
                    │  Start   │
                    └──────────┘
                         │
                         ▼              S111
                ╱─────────────────╲
               ╱     Number of      ╲
              ╱  neighborhood nodes   ╲     No
             ╱ of grandparent node greater╲────────────┐
              ╲ than or equal to first    ╱            │
               ╲    threshold            ╱             │
                ╲      ?                ╱              │
                 ╲─────────────────────╱               │
                      │ Yes                            │
                      ▼              S112               │
                ╱─────────────────╲                    │
               ╱     Number of      ╲                  │
              ╱  neighborhood nodes   ╲     No          │
             ╱ of parent node greater  ╲───────────────┤
              ╲ than or equal to       ╱               │
               ╲ second threshold     ╱                │
                ╲      ?             ╱                  │
                 ╲─────────────────╱                   │
                      │ Yes                            │
                      ▼              S113               ▼              S114
         ┌───────────────────────────┐    ┌───────────────────────────┐
         │ Determine that condition   │    │ Determine that condition   │
         │ for performing intra RAHT  │    │ for performing intra RAHT  │
         │ prediction is satisfied    │    │ prediction is not satisfied│
         └───────────────────────────┘    └───────────────────────────┘
                      │                                │
                      ▼◄───────────────────────────────┘
                ┌──────────┐
                │   End    │
                └──────────┘
```

FIG. 8

# FIG. 9

# FIG. 10

Start processing for each node

↓

S121
RAHT

↓

S122
Depth of current node within depth of inter prediction ? — No →

Yes ↓

S123
Reference frame includes node at same position as current node ? — No →

Yes ↓

S124
Apply inter prediction to current node to encode difference values

S125
Encode transform coefficients without applying inter prediction to current node

↓

S126
Store transform coefficients in memory for inter prediction

↓

End

## FIG. 11

Reference frame

Reference node

RAHT input values
$Coeff_{child0}(0) \sim Coeff_{child7}(0)$

RAHT

RAHT output values
$Coeff_{in}(0) \sim Coeff_{in}(7)$

Current frame

Current node

RAHT input values
$Coeff_{child0}(0) \sim Coeff_{child7}(0)$

RAHT

RAHT output values
$Coeff_{in}(0) \sim Coeff_{in}(7)$

Entropy encoding

EP 4 645 864 A1

## FIG. 12

$$\text{pos} = \text{mortonCode} \gg ((\text{depthNum} - \text{depth}) \times 3)$$

Layer 0
pos:0

Layer 1
pos:0 - 7

Layer 2
pos:0 - 63

Layer (depthNum - 1)
pos:0 - (2^(depthNum × 3) - 1)

# FIG. 13

```
·depth
·pos
·coeff[0][0]
·coeff[0][1]
·coeff[0][2]
·coeff[0][3]
·coeff[0][4]
·coeff[0][5]
·coeff[0][6]
·coeff[0][7]
        :
·coeff[N-1][0]
·coeff[N-1][1]
·coeff[N-1][2]
·coeff[N-1][3]
·coeff[N-1][4]
·coeff[N-1][5]
·coeff[N-1][6]
·coeff[N-1][7]
```

# FIG. 14

```
APS(){
  …
  inter_raht_prediction_enabled
  if(inter_raht_prediction_enabled){
    depth
}
```

FIG. 15

FIG. 16

EP 4 645 864 A1

## FIG. 17

Frame #x - 1

Region #1

Region #2

Regions of decoded point cloud

Position correction for combining divided point clouds

#1

#2

Position correction for inter-frame motion compensation

#1

#2

Frame #x

#3

#4

Reference

# FIG. 18

Before correction

Position shift

Position correction

After correction

# FIG. 19

Before correction

Position correction

After correction

Position shift
(Motion vector)

# FIG. 20

```
APS(){
  ...
  inter_raht_prediction_enabled
  if(inter_raht_prediction_enabled){
    depth
    raht_inter_prediction_type
    reference_position_compensate
}
```

# FIG. 21

Start

Calculate predicted value of first coefficient of first node included in first tree structure of current coding unit by using inter prediction scheme referring to reference coding unit — S201

Obtain residual value of first coefficient from bitstream — S202

Calculate first coefficient based on predicted value and residual value — S203

Perform inverse hierarchical transform on first coefficient — S204

Calculate attribute value of three-dimensional point included in current coding unit based on result of inverse hierarchical transform — S205

End

# FIG. 22

Decoding device ⌐10

Processor ⌐11

Memory ⌐12

# FIG. 23

Start

Perform hierarchical transform on attribute value of three-dimensional point included in current coding unit to calculate first coefficient of first node included in first tree structure of current coding unit — S211

Calculate predicted value of first coefficient by using inter prediction scheme referring to reference coding unit — S212

Calculate residual value that is difference between first coefficient and predicted value — S213

Generate bitstream including residual value — S214

End

# FIG. 24

20
Encoding device

21
Processor

22
Memory

## INTERNATIONAL SEARCH REPORT

| International application No. |
|---|
| **PCT/JP2023/045226** |

| A. | CLASSIFICATION OF SUBJECT MATTER |
|---|---|

*H04N 19/597*(2014.01)i; *G06T 9/40*(2006.01)i
FI:   H04N19/597; G06T9/40

According to International Patent Classification (IPC) or to both national classification and IPC

| B. | FIELDS SEARCHED |
|---|---|

Minimum documentation searched (classification system followed by classification symbols)

H04N19/00-19/98; H04N7/12; G06T1/00; G06T9/00-19/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT | |
|---|---|---|
| Category* | Citation of document, with indication, where appropriate, of the relevant passages | Relevant to claim No. |
| A | WO 2021/002443 A1 (PANASONIC INTELLECTUAL PROPERTY CORPORATION OF AMERICA) 07 January 2021 (2021-01-07)<br>paragraphs [0013]-[1199], fig. 1-168 | 1-19 |
| A | WO 2022/147015 A1 (QUALCOMM INCORPORATED) 07 July 2022 (2022-07-07)<br>paragraphs [0028]-[0234], fig. 1-18 | 1-19 |

☐ Further documents are listed in the continuation of Box C.      ☑ See patent family annex.

| | |
|---|---|
| *      Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **19 February 2024** | **05 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
**Information on patent family members**

International application No.

**PCT/JP2023/045226**

| Patent document cited in search report | | | Publication date (day/month/year) | Patent family member(s) | | | Publication date (day/month/year) |
|---|---|---|---|---|---|---|---|
| WO | 2021/002443 | A1 | 07 January 2021 | US | 2022/0114766 | A1 | |
| | | | | paragraphs [0180]-[1345], fig. 1-168 | | | |
| WO | 2022/147015 | A1 | 07 July 2022 | US | 2022/0210480 | A1 | |
| | | | | paragraphs [0028]-[0278], fig. 1-18 | | | |
| | | | | CN | 116636204 | A | |
| | | | | KR | 10-2023-0127219 | A | |

Form PCT/ISA/210 (patent family annex) (July 2022)

**REFERENCES CITED IN THE DESCRIPTION**

**Patent documents cited in the description**

*   WO 2014020663 A